# EUROPEAN PATENT APPLICATION

(11) **EP 3 960 294 A1**
(43) Date of publication of application: **02.03.2022**
(21) Application number: 21193227.2
(22) Date of filing: 26.08.2021
(51) Int. Cl.: B01L 3/00, B01L 7/00, G01N 35/00

(54) **SPECIMEN TREATMENT DEVICE, MEASUREMENT DEVICE, AND MEASUREMENT METHOD**

(30) Priority: 28.08.2020 JP 2020144910
(71) Applicant: SYSMEX CORPORATION, Kobe-shi Hyogo 651-0073 (JP)
(72) Inventor: Oue, Soichi, Hyogo, 651-0073 (JP); Sasaki, Noriaki, Hyogo, 651-0073 (JP)
(74) Representative: Hoffmann Eitle

(57) **Abstract**

Disclosed is a specimen treatment device for treating a specimen accommodated in a reaction container, the specimen treatment device comprising: an installation unit in which the reaction container is installed; a temperature adjusting unit for warming the reaction container installed in the installation unit; and an opening/closing member which can move between a first position at which the temperature adjusting unit is uncovered and a second position at which the temperature adjusting unit is covered.

## Description

### FIELD OF THE INVENTION

The present invention relates to a specimen treatment device, a measurement device and a measurement method.

### BACKGROUND

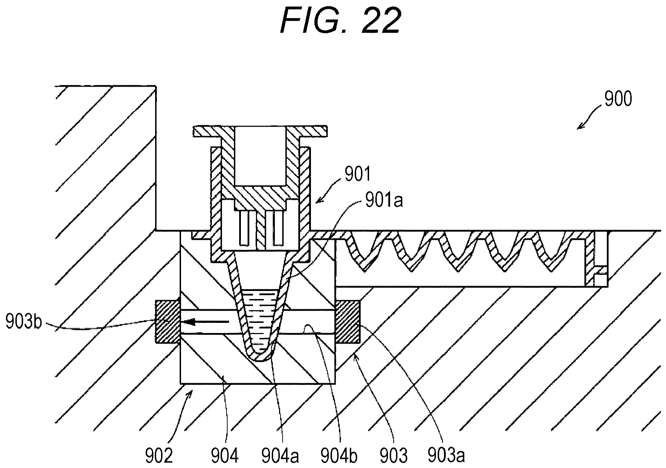

In Domestic re-publication of PCT International Application No. 2005/118772, a nucleic acid analysis device 900 is disclosed, in which the amplification and measurement of a nucleic acid is performed in a nucleic acid amplification cartridge 901 as shown in Fig. 22. The nucleic acid analysis device 900 includes a temperature adjusting mechanism 902 and a light measurement mechanism 903. The temperature adjusting mechanism 902 has a heat block 904 having, formed therein, a depressed portion 904a corresponding to the outer shape of a reaction detection unit 901a in the nucleic acid amplification cartridge 901. The reaction detection unit 901a in the nucleic acid amplification cartridge 901 is set in the depressed portion 904a in the heat block 904. In the reaction detection unit 901a, a nucleic acid and reagents necessary for the amplification and measurement of the nucleic acid are placed. In the temperature adjusting mechanism 902, the nucleic acid is amplified by varying the temperature of the heat block 904 to each of 95°C, 54°C and 45°C in predetermined cycles. The light measurement mechanism 903 includes a light emission unit 903a and a light receiving unit 903b, and monitors the quantity of fluorescent light through a through-hole 904b formed in the heat block 904.

In Domestic re-publication of PCT International Application No. 2005/118772, the nucleic acid amplification cartridge 901 is set on the upper surface of the heat block 904. Therefore, the heat block 904 is exposed in the nucleic acid analysis device 900 in such a state where the nucleic acid amplification cartridge 901 is removed. As a result, there is the possibility that a user may contact with the heat block 904. The heat block 904 is heated to 95°C, and the heat block 904, from which the nucleic acid amplification cartridge 901 on which the measurement has been completed has been removed, is kept at a high-temperature. Therefore, when another nucleic acid amplification cartridge 901 is to be newly set on the upper surface of the heat block 904, a user may be at risk of contacting with the heat block 904, which is in a high-temperature condition, by accident.

The present invention addresses the problem of preventing a user from contacting with the temperature adjusting unit by accident in a specimen treatment device, a measurement device and a measurement method in each of which a reaction container is warmed in a reaction process.

### SUMMARY OF THE INVENTION

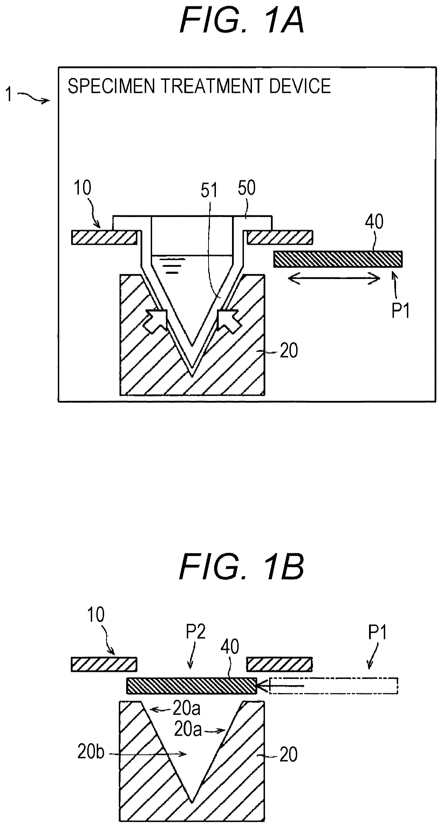

For achieving the above-mentioned object, the specimen treatment device according to a first aspect of the present invention is one for treating a specimen placed in a reaction container (50), and is provided with: an installation unit (10) in which the reaction container (50) is installed; a temperature adjusting unit (20) for warming the reaction container (50) installed in the installation unit (10); and an opening/closing member (40) which is movable between a first position (P1) at which the temperature adjusting unit (20) is uncovered and a second position (P2) at which the temperature adjusting unit (20) is covered, as shown in Fig. 1.

As mentioned above, the specimen treatment device of the present invention is provided with the opening/closing member (40) which is movable between the first position (P1) at which the temperature adjusting unit (20) is uncovered and the second position (P2) at which the temperature adjusting unit (20) is covered. According to this configuration, when the reaction container (50) is removed from the installation unit (10), the temperature adjusting unit (20) is covered with the opening/closing member (40) that has been moved to the second position (P2) and, as a result, the access to the temperature adjusting unit (20) can be blocked. As a result, it becomes possible to prevent a user from contacting with the temperature adjusting unit (20) by the opening/closing member (40) located at the second position (P2). When the reaction container (50) is to be installed in the installation unit (10), the reaction container (50) is located at a position at which the reaction container (50) is warmed by the temperature adjusting unit (20) without being blocked by the opening/closing member (40) by moving the opening/closing member (40) to the first position (P1). In this manner, a reaction process by warming is performed. Therefore, it becomes possible to prevent a user from contacting with the temperature adjusting unit (20) by accident in the specimen treatment device (1) in which the reaction container (50) is warmed in the reaction process.

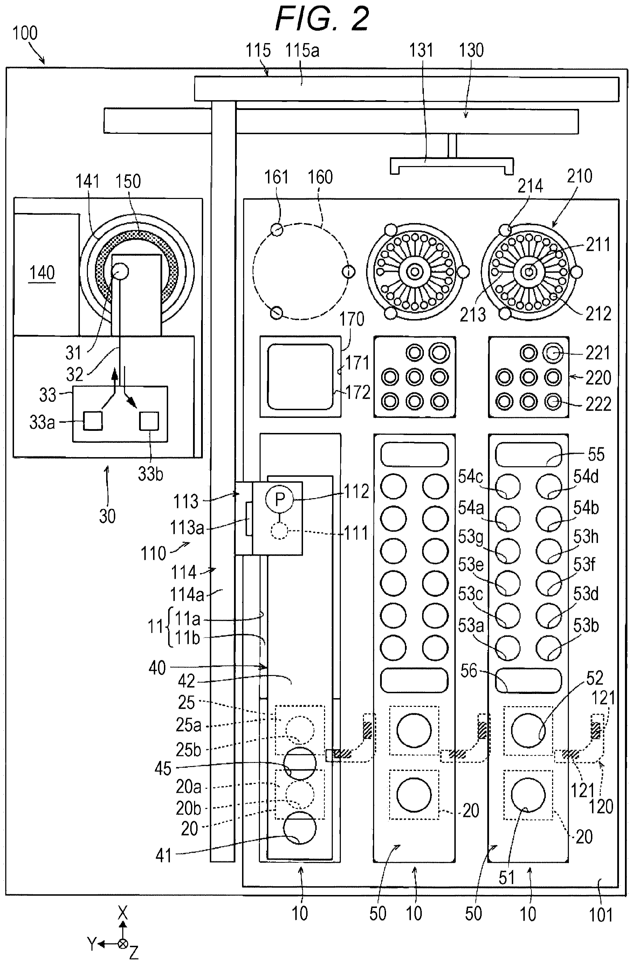

The measurement method according to a second aspect of the present invention is a measurement method using a measurement device (100) for measuring a sample, as shown in Figs. 1 and 2. In the method, a reaction container (50) installed in the measurement device (100) by a user is warmed by a temperature adjusting unit (20), the sample in the reaction container (50) that has been warmed by the temperature adjusting unit (20) is collected and measured, and, after the collection of the sample, an upper surface (20a) of the temperature adjusting unit (20) from which the reaction container (50) has been removed by the user is covered with a movably provided opening/closing member (40).

In the measurement method of the present invention, as mentioned above, after the collection of the sample, the upper surface of the temperature adjusting unit (20) from which the reaction container (50) has been removed by the user is covered with the movably provided opening/closing member (40). According to this configuration, when the reaction container (50) is removed, the upper surface (20a) of the temperature adjusting unit (20) is covered with the opening/closing member (40) and, as a result, the access to the temperature adjusting unit (20) can be blocked. As a result, it becomes possible to prevent a user from contacting with the temperature adjusting unit (20) by means of the opening/closing member (40). When the reaction container (50) is installed, the reaction container (50) is warmed by the temperature adjusting unit (20) without being blocked by the opening/closing member (40) and the reaction process is achieved by moving the opening/closing member (40). As mentioned above, it becomes possible to prevent a user from contacting with the temperature adjusting unit (20) by accident in the measurement device (100) in which the reaction container (50) is warmed in the reaction process.

According to the present invention, it becomes possible to prevent a user from contacting with the temperature adjusting unit by accident in the specimen treatment device, the measurement device and the measurement method in each of which the reaction container is warmed in the reaction process.

### BRIEF DESCRIPTION OF THE DRAWINGS

Fig. 1A is a schematic diagram showing the outline of a specimen treatment device.
Fig. 1B is a diagram showing an opening/closing member located at a second position.
Fig. 2 is a schematic plan view showing a specific configuration example of a measurement device.
Fig. 3 is a schematic perspective view showing a configuration example of a reaction container.
Fig. 4 is a schematic perspective view showing a configuration example of an installation unit.
Fig. 5 is a schematic cross-sectional view of an installation unit in which an opening/closing member is located at a second position.
Fig. 6 is a schematic cross-sectional view of an installation unit in which an opening/closing member is located at a first position.
Fig. 7A is an enlarged plan view of an opening/closing member located at a second position.
Fig. 7B is an enlarged plan view of an opening/closing member located at a first position.
Fig. 8 is a schematic cross-sectional view of an installation unit for explaining a locking mechanism in which an opening/closing member is located at a second position.
Fig. 9 is a schematic cross-sectional view of a locking mechanism as observed along the Y-axis direction.
Fig. 10 is a schematic cross-sectional view of the locking mechanism show in Fig. 9 which is taken along line-600-600.
Fig. 11 is a schematic cross-sectional view of an installation unit in which a second end part of a reaction container is located at a first height position.
Fig. 12 is a schematic cross-sectional view of an installation unit in which a second end part of a reaction container is located between a first height position and a second height position.
Fig. 13 is a schematic cross-sectional view of an installation unit in which a second end part of a reaction container is located at a second height position.
Fig. 14 is a block diagram for explaining the configuration relating to the control of a measurement device.
Fig. 15 is a flow chart showing an operation example of a measurement device.
Fig. 16 is a flow chart showing (a first half part of) an operation example of a measurement device.
Fig. 17 is a flow chart showing (a latter half part of) the operation example of a measurement device, which is subsequent to Fig. 16.
Figs. 18A to 18D are schematic diagrams showing an unlocking operation by a modified example of a locking mechanism.
Figs. 19A to 19C are schematic diagrams showing the movement of a modified example of an opening/closing member between a first position and a second position.
Figs. 20A to 20C are diagrams showing an example in which a locking mechanism is added to the modified example shown in Figs. 19A to 19C.
Figs. 21A to 21C are schematic diagrams showing the movement of anther modified example of an opening/closing member between a first position and a second position.
Fig. 22 is a diagram for explaining the prior art technique.

### DETAILED DESCRIPTION OF THE PREFERRED EMBODIMENTS

Hereinbelow, the embodiments will be described with reference to drawings.

### [Outline of measurement device]

Firstly, the outline of a specimen treatment device 1 according to one embodiment will be described with reference to Fig. 1.

The specimen treatment device 1 is a device for treating a specimen placed in a reaction container 50.

The specimen is a biological specimen. The biological specimen is a solid material. The solid specimen is a portion of a tissue or a cell collected from a subject or a treated material produced by subjecting the aforementioned collected material to a specific pretreatment. The pretreatment may be a fixation, dehydration, substitution, embedding or the like of a tissue (or a cell). The specimen may be a paraffin-embedded tissue section. The specimen treatment device 1 performs a treatment for a clinical test or a medical study of a specimen collected from a patient.

In the specimen treatment device 1, a sample is prepared by reacting a specimen placed in the reaction container 50 with a reagent. In the prepared sample, a specific analyte contained therein is detected by a below-mentioned measurement unit 30 (see Fig. 2). The analyte may be a nucleic acid such as DNA (deoxyribonucleic acid).

The specimen treatment device 1 may be configured as an independent device, or may be provided as a part of a measurement device 100 (see Fig. 2). In the case of a measurement device 100 including a below-mentioned measurement unit 30 (see Fig. 2), the specimen treatment device 1 carries out a pretreatment for detecting the analyte by a measurement. The specimen treatment device 1 carries out, for example, a treatment for warming the specimen to melt an embedding agent, a treatment for reacting the specimen with a reagent or a treatment for binding a labeling substance capable of reacting specifically with the analyte to the analyte. The measurement device 100 detects the labeling substance in the pretreated specimen to detect the analyte bound to the labeling substance.

As shown in Fig. 1, the specimen treatment device 1 is provided with an installation unit 10, a temperature adjusting unit 20 and an opening/closing member 40.

In the installation unit 10, a reaction container 50 is installed. The installation unit 10 forms an installation space for the reaction container 50. The reaction container 50 is installed in the installation unit 10 by moving the reaction container 50 from an upper position of the installation unit 10 toward a downward direction. The installation unit 10 is constituted to support the reaction container 50. The installation unit 10 has a structure for preventing the misalignment of the reaction container 50 or the detachment of the reaction container 50 from the installation unit 10. The installation unit 10 is a depressed portion and prevents the misalignment of the reaction container 50 in the horizontal direction by utilizing an inner surface of the depressed portion.

The temperature adjusting unit 20 is arranged below the installation unit 10, and is configured to warm the reaction container 50 installed in the installation unit 10. The temperature adjusting unit 20 has an upper surface 20a which is located away from a specimen accommodation section 51 in the reaction container 50 installed in the installation unit 10 in the proximity to the specimen accommodation section 51. The wording "the upper surface 20a is located away from the specimen accommodation section 51 in the proximity to the specimen accommodation section 51" as used herein refers to the matter that the upper surface 20a comes close to the specimen accommodation section 51 in a non-contacting manner but to such an extent that heat can be transferred to warm the upper surface 20a. The temperature adjusting unit 20 generates heat, and transfers the generated heat to the specimen accommodation section 51 in the reaction container 50, thereby warming the reaction container 50. The heat transfer is achieved with high efficiency when the temperature adjusting unit 20 moves closer to the specimen accommodation section 51. As shown in Fig. 1, an installation hole 20b having a depressed form corresponding to the outer shape of the specimen accommodation section 51 in the reaction container 50 is formed on an upper surface 20a. The installation hole 20b is arranged in such a manner that the inner surface of the installation hole 20b which corresponds to a portion of the upper surface 20a surrounds the periphery of the specimen accommodation section 51. According to this configuration, the heat-transferring area is increased to perform the heat transfer with high efficiency.

The temperature adjusting unit 20 has a function to warm the reaction container 50. The temperature adjusting unit 20 includes a heat source. The temperature adjusting unit 20 controls an amount of generated heat so as to adjust the temperature of a content in the reaction container 50 to a value falling within a desired temperature range. The temperature adjusting unit 20 includes a heat pump. The heat pump is, for example, a Peltier device, and may be a vapor compression heat pump. The temperature adjusting unit 20 warms the reaction container 50 to a temperature of, for example, 50°C or higher. By this warming, the specimen and the reagent in the specimen accommodation section 51 is reacted with each other.

The opening/closing member 40 is a member which is configured so as to uncover or cover the temperature adjusting unit 20.

The opening/closing member 40 is configured movably between a first position P1 (see Fig. 1A) at which the temperature adjusting unit 20 is uncovered and a second position P2 (see Fig. 1B) at which the upper surface 20a of the temperature adjusting unit 20 is covered.

As shown in Fig. 1A, the opening/closing member 40 uncovers the temperature adjusting unit 20 toward the installation unit 10 at the first position P1 to expose the upper surface 20a of the temperature adjusting unit 20. As a result, when the reaction container 50 is installed in the installation unit 10 while positioning the opening/closing member 40 at the first position P1, the specimen accommodation section 51 in the reaction container 50 can come close to the upper surface 20a of the temperature adjusting unit 20. In other words, when the opening/closing member 40 is located at the first position P1, the reaction container 50 can be installed at a proper position in the installation unit 10.

As shown in Fig. 1B, the opening/closing member 40 covers the upper surface 20a of the temperature adjusting unit 20 at the second position P2 to block the access to the upper surface 20a from the installation unit 10. Therefore, when the opening/closing member 40 is located at the second position P2, the upper surface 20a of the temperature adjusting unit 20 is covered with the opening/closing member 40 to block the contact of a finger of a user with the upper surface 20a. If it is tried to install the reaction container 50 in the installation unit 10 while keeping the opening/closing member 40 at the second position P2, the specimen accommodation section 51 in the reaction container 50 cannot move to a position which is located on the temperature adjusting unit 20 side and is located below the opening/closing member 40. In other words, when the opening/closing member 40 is located at the second position P2, it is impossible to install the reaction container 50 at a proper position on the installation unit 10.

When the reaction container 50 is not installed in the installation unit 10, the opening/closing member 40 is arranged at the second position P2 and blocks the insertion of a finger of a user. The opening/closing member 40 also blocks the entry of dusts or foreign matters into the upper surface 20a of the temperature adjusting unit 20. When the reaction container 50 is to be installed in the installation unit 10, the opening/closing member 40 is moved from the second position P2 to the first position P1. When the opening/closing member 40 is moved to the first position P1, a user installs the reaction container 50 in the installation unit 10. As a result, the specimen accommodation section 51 in the reaction container 50 is placed at a position which contacts with or comes close to the temperature adjusting unit 20 to enable the warming of the reaction container 50.

As mentioned above, the specimen treatment device 1 according to this embodiment includes the opening/closing member 40 which can move between the first position P1 at which the temperature adjusting unit 20 is uncovered and the second position P2 at which the upper surface 20a of the temperature adjusting unit 20 is covered. When the reaction container 50 is removed from the installation unit 10, the opening/closing member 40 moved to the second position P2 covers the upper surface 20a of the temperature adjusting unit 20, whereby the access to the temperature adjusting unit 20 can be blocked. Therefore, the contact of a user with the temperature adjusting unit 20 can be prevented by the opening/closing member 40 located at the second position P2. When the reaction container 50 is to be installed in the installation unit 10, the reaction container 50 is located at a position at which the reaction container 50 is warmed by the temperature adjusting unit 20 without being blocked by the opening/closing member 40 by moving the opening/closing member 40 to the first position P1. In this manner, the reaction process by warming is carried out. In this manner, it becomes possible to prevent a user from contacting with the temperature adjusting unit 20 by accident in the specimen treatment device 1 in which the reaction container 50 is warmed in the reaction process.

### [Specific configuration example of measurement device]

Next, a specific configuration example of a measurement device 100 including a specimen treatment device 1 and a measurement unit 30 shown in Fig. 1 will be described in detail with reference to Figs. 2 to 14. In the example shown in Figs. 2 to 14, the measurement device 100 is a nucleic acid measurement device which automatically performs the extraction of a nucleic acid, the real time detection of an amplification reaction of the nucleic acid and the analysis of the nucleic acid. In the following explanation, the installation unit 10 is referred to as a "first installation unit 10".

In this example, the specimen is a formalin-fixed paraffin-embedded (FFPE) tissue section. The measurement device 100 makes the temperature adjusting unit 20 to warm the reaction container 50 to melt paraffin, performs the amplification of a nucleic acid in the tissue and the labeling of the nucleic acid, and also performs the measurement of a labeling substance bound to an amplification product. The measurement device 100 analyzes the presence or absence of a detection target nucleic acid, which is an analyte, on the basis of the result of the measurement of the labeling substance.

As shown in Fig. 2, the measurement device 100 includes a first installation unit 10, a dispensing unit 110, a temperature adjusting unit 20, 25, a magnetic force application unit 120, a transfer unit 130, a rotating mechanism 140, a temperature adjusting unit 150 and a measurement unit 30. In Fig. 1, the X-axis, the Y-axis and the Z-axis are orthogonal to one another. The X-axis and the Y-axis are axes orthogonal to each other in a horizontal plane. The Z-axis is a vertical-direction axis.

The measurement device 100 includes a base plate 101 that is parallel to the X-Y plane. In the base plate 101, the first installation unit 10, a second installation unit 160 and a third installation unit 170 are provided. Fig. 2 shows an example in which three first installation units 10, three second installation units 160 and three third installation units 170 are provided. In the base plate 101, one first installation unit 10, one second installation unit 160 and one third installation unit 170 are arranged linearly along the X-axis. Each of the three first installation units 10, the three second installation units 160 and the three third installation units 170 are arranged along the Y-axis.

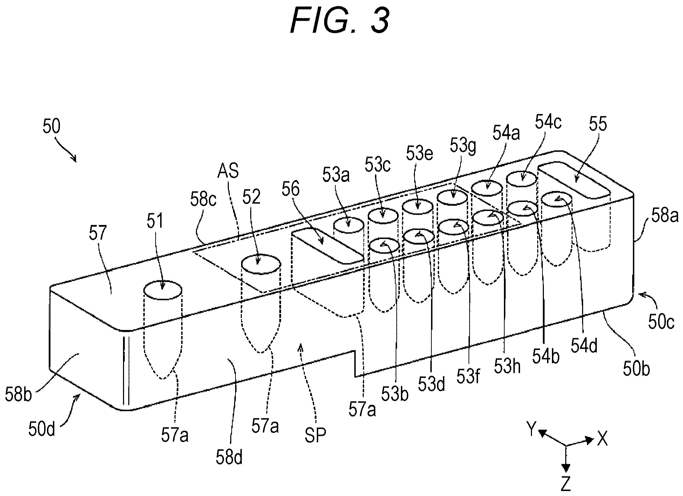

In the first installation unit 10, a reaction container 50 is installed. The first installation unit 10 includes a depressed portion 11 composed of an opening 11a formed on the base plate 101 and a support plate 11b located on the vertical lower side of the base plate 101. As viewed planarly, the opening 11a has a rectangular outline which corresponds to the planar shape of the rectangular reaction container 50 and is slightly larger than the outer shape of the reaction container 50. The depressed portion 11 is formed to receive the reaction container 50. The reaction container 50 is configured such that the lower end part 50b (see Fig. 3) of the reaction container 50 shown in Fig. 3 is supported in the vertical upward direction by the support plate 11b and is held in the depressed portion 11. Upon the start of the analysis of a nucleic acid, the reaction container 50 is installed in the first installation unit 10 by a user.

As shown in Fig. 3, the reaction container 50 includes a specimen accommodation section 51, a reagent accommodation section 52, reagent accommodation sections 53a to 53h, mixing sections 54a to 54d, a reagent accommodation section 55 and a waste solution accommodation section 56. The specimen accommodation section 51, the reagent accommodation section 52, the reagent accommodation sections 53a to 53h, the mixing sections 54a to 54d, the reagent accommodation section 55 and the waste solution accommodation section 56 are arranged in the reaction container 50 in such a manner that an upper part of each of these members is uncovered, and are wells in each of which a liquid can be contained. Each of the reagent accommodation sections 52 and 53a to 53h contains a nucleic acid extraction reagent in advance. The upper part of each of the reagent accommodation section 52, the reagent accommodation sections 53a to 53h and the waste solution accommodation section 56 is sealed by an aluminum seal AS. In the reagent accommodation section 55, a reagent is placed upon the installation of the reaction container 50 in the first installation unit 10.

The reaction container 50 has an upper surface plate 57 and side surface plates 58a to 58d. The upper surface plate 57 has a rectangular flat-plate-like shape, and has, formed therein, an opened part constituting each of the specimen accommodation section 51, the reagent accommodation section 52, the reagent accommodation sections 53a to 53h, the mixing sections 54a to 54d, the reagent accommodation section 52 and the waste solution accommodation section 56. To each of the opened parts in the upper surface plate 57, wall plate parts 57a each comparting a depressed space constituting a well are continued and project downward. In four sides of the rectangular upper surface plate 57, four side surface plates 58a, 58b, 58c and 58d are formed, respectively. Each of the side surface plates 58a to 58d has a flat-plate-like shape and extends downward from the rectangular upper surface plate 57. The side surface plates 58a and 58b face each other in a direction along a longer side of the upper surface plate 57 (i.e., the X-axis direction), and constitute a pair of side surfaces corresponding to shorter sides of the upper surface plate 57, respectively. The side surface plates 58c and 58d face each other in a direction along a longer side of the upper surface plate 57 (i.e., the Y-axis direction), and constitute a pair of side surfaces corresponding to shorter sides of the upper surface plate 57, respectively.

The reaction container 50 is a resin molded article in which the upper surface plate 57, the side surface plates 58a to 58d and the wall plate parts 57a are formed integrally. The upper surface plate 57, the side surface plates 58a to 58d and each wall plate parts 57a have approximately the same thickness as one another. The lower surface side of the reaction container 50 is uncovered. That is, in the reaction container 50, wells are not formed in a solid block, but a space SP surrounded by the side surface plates 58a to 58d is formed on the back side (i.e., the lower side) of the upper surface plate 57. As mentioned below, when the reaction container 50 is installed in a first installation unit 10, an opening/closing member 40 and a temperature adjusting unit 20 are arranged in the space SP. In one example, the reaction container 50 is a disposable container for a single measurement use.

Next, a liquid to be accommodated in each accommodation sections will be described. The reagent accommodation section 52 in advance accommodates a reagent containing magnetic particles and a magnetic particle storage solution, and the reagent accommodation sections 53a to 53h in advance contain a solubilizing solution, proteinase K, an oil, an eluent, a stock solution of an extraction reagent, a stock solution of a second washing solution, a stock solution of a diluting solution, and a stock solution of a first washing solution, respectively. The specimen accommodation section 51 is provided with nothing left therein. In the specimen accommodation section 51, a specimen is placed by a user prior to the installation of the reaction container 50.

As shown in Fig. 2, the second installation unit 160 is an installation unit for installing a second container 210 therein. The second installation unit 160 is composed of an upper surface of a base plate 101 and three pins 161 arranged on the upper surface of the base plate 101. The second container 210 is installed in the second installation unit 160 by engaging a below-mentioned engaging section 214 with the three pins 161.

The second container 210 includes an injection port 211, an accommodation section 212, and a flow path 213 which connects the injection port 211 to the accommodation section 212. The second container 210 is a disk-shaped container in which the injection port 211 is arranged at a center position and a plurality of accommodation sections 212 are also arranged at positions located on the side of an outer periphery apart by a predetermined radius thereof from the center position and located in the peripheral direction of the outer periphery. The number of the flow paths 213 to be provided is the same as the number of the accommodation sections 212, and each of the flow paths 213 connects the injection port 211 to one accommodation section 212. The second container 210 is not necessarily a disk-shaped container.

On the outer peripheral part of the second container 210, three engaging sections 214 are formed. Each of the engaging sections 214 is notched. The three engaging sections 214 are respectively engaged with the three pins 161 in the second installation unit 160.

An extract extracted in the reaction container 50 and containing a nucleic acid is injected into the injection port 211. Each of the accommodation sections 212 in advance contains a reagent for amplifying the nucleic acid in the extract. The amplification and analysis of the nucleic acid extracted in the reaction container 50 can be carried out the same times as the number of the accommodation sections 212.

As shown in Fig. 2, the third installation unit 170 is an installation unit for installing a third container 220 therein. The third installation unit 170 is composed of an opening 171 formed in the base plate 101 and a support plate 172 located on the vertical lower side of the base plate 101. Upon the start of the analysis of the nucleic acid, the third container 220 is installed in the third installation unit 170.

The third container 220 holds one sticking chip 221 and a plurality of pipetting chips 222. In Fig. 2, seven pipetting chips 222 are held in the third container 220. The sticking chip 221 is a chip which is stuck into an aluminum seal AS in the reaction container 50 to uncover an upper part of an accommodation section located below the aluminum seal AS. Each of the pipetting chips 222 has a hole which penetrates in the vertical direction. Each of the pipetting chips 222 is attached to a sucking section 111 in a dispensing unit 110. The sticking chip 221 is also attached to a lower end of the sucking section 111.

The dispensing unit 110 transfers the extract placed in the reaction container 50 from the reaction container 50 to the injection port 211 in the second container 210. The dispensing unit 110 includes the sucking section 111, a pump 112, a vertical transfer section 113, a forward-and-back transfer section 114 and a side-to-side transfer section 115. In the sucking section 111, the sticking chip 221 and the pipetting chips 222 are provided removably. The sucking section 111 is composed of a nozzle capable of sucking and ejecting a liquid. The pump 112 is connected to the sucking section 111. The pump 112 applies a positive pressure and a negative pressure to the sucking section 111 so as to suck and eject a liquid through the pipetting chips 222 attached to the sucking section 111.

The vertical transfer section 113 drives a stepping motor to transfer the sucking section 111 in the Z-axis direction along a rail 113a. The forward-and-back transfer section 114 drives the stepping motor to transfer the vertical transfer section 113 in the X-axis direction along a rail 114a. The side-to-side transfer section 115 drives the stepping motor to transfer the forward-and-back transfer section 114 in the Y-axis direction along a rail 115a.

The sucking section 111 can move in the measurement device 100 along the X-, Y- and Z-axes by means of the vertical transfer section 113, the forward-and-back transfer section 114 and the side-to-side transfer section 115. The dispensing unit 110 sucks the extract from the reaction container 50 by means of the pipetting chips 222 attached to the sucking section 111. Subsequently, the dispensing unit 110 transfers the pipetting chips 222 to the injection port 211 of the second container 210 which is aligned with the reaction container 50 having the extract sucked therein along the X-axis direction. The dispensing unit 110 ejects the extract through the injection port 211 to the second container 210.

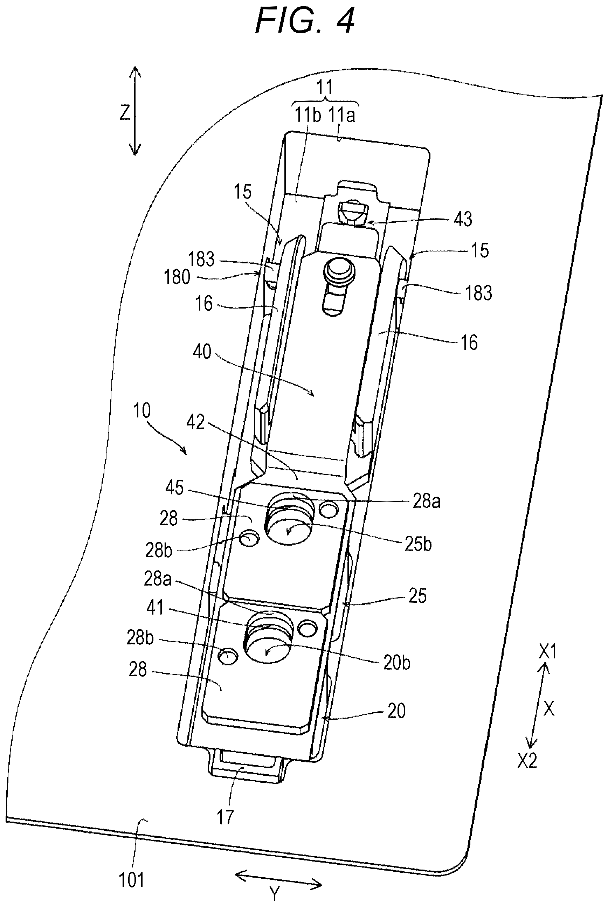

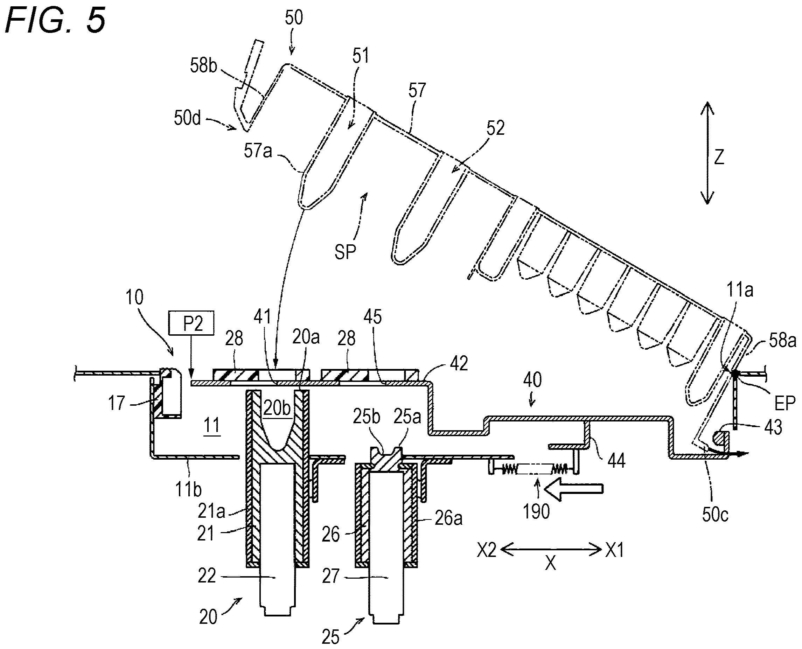

As shown in Figs. 2 and 4, the temperature adjusting unit 20, 25 is arranged in the opening 11a in the first installation unit 10 as viewed planarly. The temperature adjusting unit 20, 25 is arranged below the base plate 101 in which the opening 11a of the first installation unit 10 is formed. As shown in Fig. 5, the temperature adjusting unit 20 includes a heat conducting member 21 and a heat generator 22. The heat generator 22 is, for example, a heater which generates heat upon the supply of an electric power. The heat conducting member 21 is a heat block to which the heat generator 22 is connected. The heat block is formed from a highly heat-conducting material such as aluminum (or an aluminum alloy). The upper surface 20a of the temperature adjusting unit 20 corresponds to an upper surface of the heat conducting member 21. On the upper surface 20a, an installation hole 20b in which the specimen accommodation section 51 of the reaction container 50 is received is formed. The heat conducting member 21 is accommodated in a case 21a, and the outer peripheral part of the heat conducting member 21 is covered with the case 21a. The outer surface of the case 21a is kept at a sufficiently low temperature even when the temperature of the heat conducting member 21 is increased by means of the heat generator 22.

The temperature adjusting unit 25 also includes a heat conducting member 26 and a heat generator 27. The temperature adjusting unit 25 warms a reagent accommodation section 52 in the reaction container 50 which is installed in the first installation unit 10. The heat generator 27 is, for example, a heater, and the heat conducting member 26 is a heat block to which the heat generator 27 is connected. On the upper surface 25a of the temperature adjusting unit 25, an installation hole 25b in which the reagent accommodation section 52 of the reaction container 50 is received is formed. The heat conducting member 26 is accommodated in a case 26a, and the outer peripheral part of the heat conducting member 26 is covered with the case 26a. The outer surface of the case 26a is kept at a sufficiently low temperature even when the temperature of the heat conducting member 26 is increased by means of the heat generator 27.

As shown in Fig. 2, the magnetic force application unit 120 is arranged in the base plate 101, and is configured movably in the Y-axis direction. The magnetic force application unit 120 includes two magnets 121. When the magnetic force application unit 120 is put close to the reagent accommodation section 52 in the reaction container 50 which is installed in the first installation unit 10, magnetic particles contained in the reagent accommodation section 52 are attracted to the magnets 121 and, as a result, the magnetic particles are adsorbed onto a wall surface of the reagent accommodation section 52.

The transfer unit 130 includes a band part 131 and a mechanism for transferring the band part 131 along the Y-axis direction. The transfer unit 130 holds and transfers the second container 210 between the position of the second installation unit 160 and the position of the rotating mechanism 140. The transfer unit 130 transfers the second container 210 in which the extract has been injected and which has been installed in the second installation unit 160 to the rotating mechanism 140.

The rotating mechanism 140 includes a rotatable container installation unit 141. In the container installation unit 141, the second container 210 is installed. The rotating mechanism 140 rotates the container installation unit 141 to rotate the second container 210, whereby the extract in the second container 210 is fed to the accommodation section 212 through the flow path 213 by the action of a centrifugal force.

At this time, the nucleic acid contained in the extract in the accommodation section 212 is mixed with the reagent in advance accommodated in the accommodation section 212. The accommodation section 212 in advance contains a reagent for amplifying a detection target nucleic acid in which a mutation occurs in a detection target site in the nucleic acid and a reagent including a fluorescent probe capable of binding specifically to the detection target nucleic acid. The fluorescent probe includes a fluorescent substance. When the fluorescent probe binds to the detection target nucleic acid, the detection target nucleic acid is labeled with the fluorescent substance.

The temperature adjusting unit 150 adjusts the temperature of the second container 210 installed in the container installation unit 141 in such a manner that a nucleic acid amplification reaction occurs in the accommodation section 212. The temperature adjusting unit 150 is composed of a Peltier device.

A nucleic acid amplification reaction occurs in the accommodation section 212 by adjusting the temperature by the temperature adjusting unit 150. When the detection target nucleic acid is contained in the nucleic acid, the detection target nucleic acid is amplified in the accommodation section 212. In contrast, when the detection target nucleic acid is not contained in the nucleic acid, the detection target nucleic acid is not amplified in the accommodation section 212. When the detection target nucleic acid is amplified, the amplified detection target nucleic acid is labeled with the fluorescent substance in the fluorescent probe. Therefore, fluorescent light is generated at a light quantity corresponding to the amount of amplification upon the irradiation of the accommodation section 212 with excitation light.

The rotating mechanism 140 transfers each of the accommodation sections 212 in such a manner that each of the temperature-adjusted accommodation sections 212 is positioned at a measurement position by the measurement unit 30. The measurement position is a position located just under a below-mentioned detection head 31. The rotating mechanism 140 rotates the container installation unit 141 to position the accommodation sections 212 in the second container 210 which is installed in the container installation unit 141 one by one in accordance with the predetermined turns.

The measurement unit 30 detects a nucleic acid amplification reaction occurring in the accommodation section 212 that has been positioned at the measurement position by the rotating mechanism 140. More specifically, the measurement unit 30 detects the intensity of a fluorescent signal which represents the amount of an amplification product produced by the nucleic acid amplification reaction.

The measurement unit 30 includes a detection head 31 and an optical unit 33 which is connected to the detection head 31 through an optical fiber 32. The measurement unit 30 irradiates the accommodation section 212 in the second container 210 with light to detect a nucleic acid amplification reaction. The detection head 31 is arranged at a position located just above the accommodation section 212 in the second container 210 which is installed in the container installation unit 141 in such a manner that the detection head 31 faces the accommodation section 212. The optical unit 33 includes a light source 33a and a light detector 33b.

The light source 33a emits excitation light having a predetermined wavelength. When the fluorescent probe is bound to the detection target substance, the excitation light emitted from the light source 33a excites the fluorescent substance in the fluorescent probe to generate fluorescent light. The excitation light emitted from the light source 33a is then emitted to the inside of the accommodation section 212 through the optical fiber 32 and the detection head 31. The detection head 31 also receives fluorescent light generated from the inside of the accommodation section 212. The received fluorescent light is then guided by the optical unit 33 through the optical fiber 32 and is emitted to the light detector 33b. The light detector 33b receives fluorescent light, measures the intensity of the received fluorescent light, and outputs an electric signal corresponding to the intensity of the fluorescent light. The output signal from the light detector 33b is the result of the measurement by the measurement unit 30.

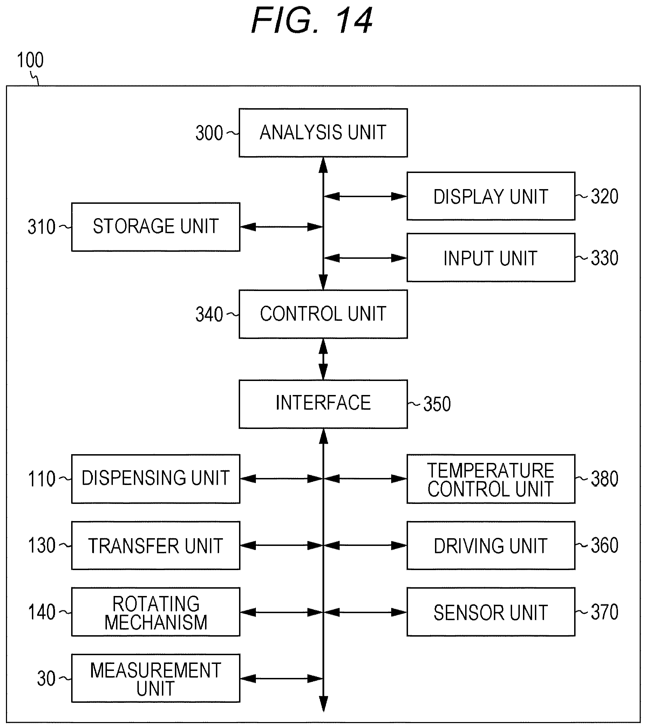

In the measurement device 100, a plurality of time-series data each representing a nucleic acid amplification reaction occurring in each of the accommodation sections 212 are generated from the electric signal of the fluorescent light detected by the light detector 33b in the measurement unit 30 by means of a below-mentioned analysis unit 300 (see Fig. 14). The analysis unit 300 determines as to whether or not the detection target substance is contained in each of the accommodation sections 212 on the basis of the time-series data, and displays the determination results or the like on a below-mentioned display unit 320 (see Fig. 14).

### (Detailed structure of first installation unit)

In the example shown in Fig. 4, the first installation unit 10 is provided with a temperature adjusting unit 20, an opening/closing member 40, and a locking mechanism 180 for the opening/closing member 40. In the inside of a depressed portion 11 in the first installation unit 10, the temperature adjusting unit 20, the opening/closing member 40 and the locking mechanism 180 are arranged. The opening/closing member 40 is arranged between a base plate 101 having an opening 11a formed therein and a support plate 11b constituting the bottom surface of the depressed portion 11. When the depressed portion 11 receives the reaction container 50, the temperature adjusting unit 20, the opening/closing member 40 and the locking mechanism 180 are positioned in a space SP (see Fig. 3) surrounded by side surface plates 58a to 58d of the reaction container 50.

### <Opening/closing member>

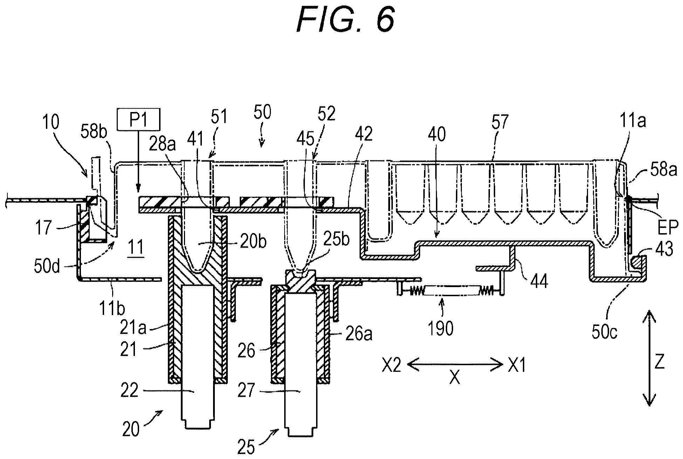

As shown in Figs. 5 and 6, the opening/closing member 40 is a plate-shaped member which is arranged so as to cover the upper surface 20a of the heat conducting member 21 in the depressed portion 11. The opening/closing member 40 is configured slidably along the upper surface 20a of the temperature adjusting unit 20. According to this configuration, the temperature adjusting unit 20 is placed in the depressed portion 11, and therefore it becomes possible to prevent a user from accessing to the temperature adjusting unit 20 without the depressed portion 11 (i.e., from a direction other than the direction toward the upper part of the depressed portion 11). It also becomes possible to prevent the access to the temperature adjusting unit 20 while installing the reaction container 50 in the first installation unit 10. Because the opening/closing member 40 is placed in the inside of the depressed portion 11, it becomes possible to effectively prevent a user from contacting with the opening/closing member 40 that is a movable member by accident. As a result, it becomes possible to effectively prevent the movement of the opening/closing member 40 to the first position P1 by accident.

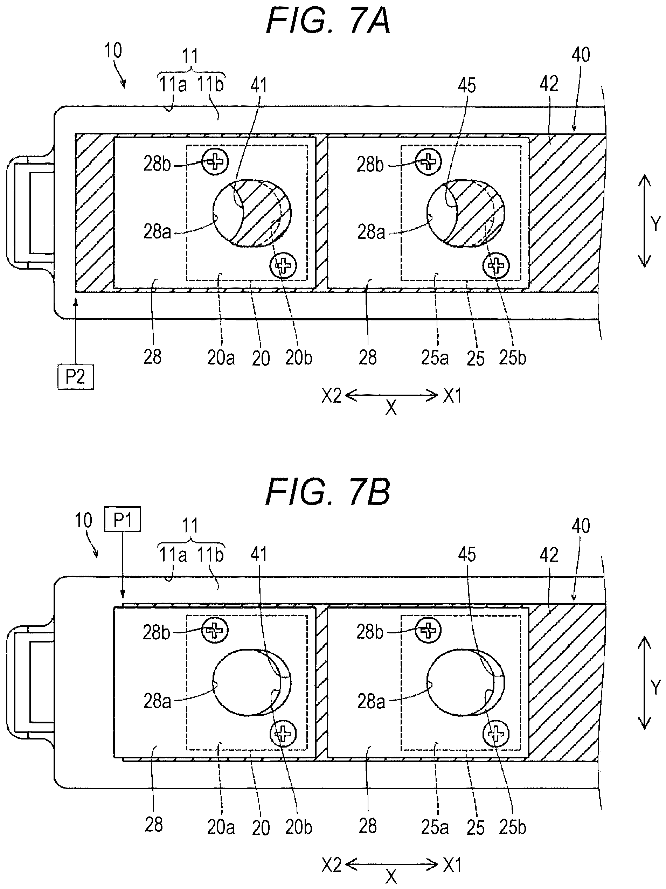

In the example shown in Figs. 4 to 6, the opening/closing member 40 is a plate-shaped member which extends over the length-direction (X-axis direction) whole length of the first installation unit 10. The opening/closing member 40 (see Fig. 5) is arranged with leaving a small space above the upper surface 20a of the temperature adjusting unit 20. Therefore, it becomes possible to prevent the insertion of a hand or a finger from the side direction between the opening/closing member 40 and the upper surface 20a of the temperature adjusting unit 20. The opening/closing member 40 is arranged so as to cover both of the temperature adjusting unit 20 and the temperature adjusting unit 25. The opening/closing member 40 can move slidably in the horizontal direction along the X-axis. As shown in Figs. 5 and 7A, the opening/closing member 40 covers the upper surface 20a of the temperature adjusting unit 20 by sliding the opening/closing member 40 to one side of the X-axis direction (i.e., the X2 direction side) and is positioned at the second position P2 at which the access to the temperature adjusting unit 20 in the reaction container 50 is blocked. As shown in Figs. 6 and 7B, the opening/closing member 40 is arranged at the first position P1 at which the access of the reaction container 50 to the temperature adjusting unit 20 through the first installation unit 10 is permitted by sliding the opening/closing member 40 to the other side of the X-axis direction (i.e., the X1 direction side).

As shown in Figs. 7A and 7B, the opening/closing member 40 has a through-hole 41 which corresponds to the installation hole 20b in the heat conducting member 21. The planar shape of the through-hole 41 approximately coincides with that of the installation hole 20b. The first position P1 is a position at which the through-hole 41 and the installation hole 20b overlap each other, and the second position P2 is a position at which the through-hole 41 is shifted relative to the installation hole 20b in the sliding direction. That is, when the opening/closing member 40 is located at the first position P1, the horizontal-direction position of the through-hole 41 approximately coincides with that of the installation hole 20b and the through-hole 41 and the installation hole 20b overlap each other in the Z-axis direction. At this time, the installation hole 20b on the upper surface 20a of the temperature adjusting unit 20 is exposed through the through-hole 41. When the opening/closing member 40 is located at the second position P2, the horizontal-direction position of the through-hole 41 is misaligned with that of the installation hole 20b. The installation hole 20b on the upper surface 20a of the temperature adjusting unit 20 is covered with a shielding section 42 in the opening/closing member 40. In Fig. 7, the shielding section 42 in the opening/closing member 40 is hatched. The shielding section 42 is a part of the opening/closing member 40 in which no through-hole 41 is formed.

According to this configuration, at the first position P1, the opening/closing member 40 does not evacuate entirely from the upper part of the temperature adjusting unit 20, but the access to the temperature adjusting unit 20 is permitted only at the through-hole 41 above the temperature adjusting unit 20. Therefore, a region on which the temperature adjusting unit 20 is exposed can be minimized as much as possible, and the possibility that a user may contact with the temperature adjusting unit 20 can also be reduced as much as possible.

In this example, one through-hole 41 and one through-hole 45 respectively corresponding to the temperature adjusting unit 20 and the temperature adjusting unit 25 are provided. When the opening/closing member 40 is located at the first position P1, the upper surface of each of the temperature adjusting unit 20 and the temperature adjusting unit 25 is exposed. When the opening/closing member 40 is located at the second position P2, the upper surface of each of the temperature adjusting unit 20 and the temperature adjusting unit 25 is covered with the opening/closing member 40.

In the example shown in Fig. 7, a cover member 28 having, formed therein, a hole part 28a through which the reaction container 50 is to be passed is arranged at a position above the upper surface of the opening/closing member 40. One cover member 28 is provided for each of the temperature adjusting unit 20 and the temperature adjusting unit 25. The two cover members 28 are fixed to the upper surface of the temperature adjusting unit 20 and the upper surface of the temperature adjusting unit 25, respectively, with a screw member 28b. The opening/closing member 40 moves slidably between each of the upper surface of the temperature adjusting unit 20 and the upper surface of the temperature adjusting unit 25 and each of the cover members 28. The cover member 28 may not be provided.

The hole part 28a in the cover member 28 in the temperature adjusting unit 20 is formed at a position at which the hole part 28a vertically overlaps the installation hole 20b in the temperature adjusting unit 20. The hole part 28a in the cover member 28 in the temperature adjusting unit 25 is formed at a position at which the hole part 28a vertically overlaps the installation hole 25b in the temperature adjusting unit 25. When the opening/closing member 40 is located at the first position P1, the installation hole 20b is uncovered through the hole part 28a and the through-hole 41, and the installation hole 25b is uncovered through the hole part 28a and the through-hole 45. When the opening/closing member 40 is located at the second position P2, the cover members 28 cover a portion of the through-hole 41 and a portion of the through-hole 45, respectively, from above. Alternatively, the through-hole 41 and the through-hole 45 may be covered entirely. In this manner, when the opening/closing member 40 is located at the second position P2, the insertion of a finger of a user and the entering of dusts or the like or into the through-hole 41 and the through-hole 45 can be prevented. In the example shown in Fig. 7, when the opening/closing member 40 is located at the second position P2, the exposed area of each of the through-hole 41 and the through-hole 45 through the hole part 28a has a size sufficient for the prevention of the insertion of a tip of a fiber of a user. As a result, even when the second position P2 is set at a position at which the positions of the through-hole 41 and the through-hole 45 are entirely shifted from the upper part of the temperature adjusting unit 20 and the upper part of the temperature adjusting unit 25, respectively, it becomes possible to prevent the contact of a finger of a user with a heated part. In other words, the sliding distance between the first position P1 and the second position P2 can be reduced.

### <Movement to first position>

In the example shown in Figs. 5 and 6, the opening/closing member 40 is configured to move from the second position P2 to the first position P1 in conjunction with the operation to install the reaction container 50 in the first installation unit 10. According to this configuration, it becomes possible move the opening/closing member 40 to the first position P1 automatically and to install the reaction container 50 in the first installation unit 10 only by performing the operation to install the reaction container 50 in the first installation unit 10 by a user without the need to perform the operation to move the opening/closing member 40 by the user.

As mentioned below, the opening/closing member 40 is configured to be positioned at the second position P2 at all times when the reaction container 50 is not placed in the first installation unit 10. The opening/closing member 40 is moved from the second position P2 to the first position P1 upon the installation of the reaction container 50 in the first installation unit 10, and is held at the first position P1 during the operation to install the reaction container 50 in the first installation unit 10.

As shown in Figs. 5 and 6, the opening/closing member 40 includes a first pressed part 43 which is pressed by the reaction container 50. The opening/closing member 40 is configured to move toward the first position P1 upon the pressing of the first pressed part 43 by the reaction container 50 that is moved toward the first installation unit 10. That is, during the transfer of the reaction container 50 into the depressed portion 11 by a user, the reaction container 50 presses the first pressed part 43 and the user moves the reaction container 50, whereby the opening/closing member 40 is also moved to the first position P1 through the reaction container 50.

In this manner, the opening/closing member 40, which is a movable component, can be pressed and moved through the reaction container 50 without the need for a user to directly contact with the opening/closing member 40. As a result, it becomes possible to prevent foreign matters from being stuck in a mechanism for moving the opening/closing member 40 or to prevent the movement of the opening/closing member 40 from being inhibited by the contact with a user. Unlike a configuration in which the installation of the reaction container 50 is detected with a sensor or the like and the opening/closing member 40 is moved by means of a motor or the like, the above-mentioned configuration has such an advantage that the operation to install the reaction container 50 in the first installation unit 10 can be detected by the direct contact of the reaction container 50 with the opening/closing member 40 and therefore it is not required to provide a sensor or the like for detecting the installation of the reaction container 50. Furthermore, because it is not required to provide a motor or the like for moving the opening/closing member 40, it becomes possible to prevent the structure of the opening/closing member 40 from becoming complicated.

More specifically, the first pressed part 43 is arranged at an end part of the opening/closing member 40 which is located on a side away from the temperature adjusting unit 20 (i.e., the X1 direction side). The first pressed part 43 has a hook-like shape which is formed so as to rise upward from the plate-shaped opening/closing member 40. When the reaction container 50 is to be installed, a first end part 50c of the reaction container 50 which is located on a side away from the specimen accommodation section 51 (i.e., the X1 direction side) contacts with the first pressed part 43. The first end part 50c is a lower end part of the side surface plate 58a of the reaction container 50. In the example shown in Fig. 5, the first end part 50c is formed in a projecting shape which projects from the lower end part of the side surface plate 58a toward the outside. When the reaction container 50 is to be installed in the first installation unit 10, the first end part 50c having a projecting shape is engaged with the first pressed part 43 having a hook-like shape. As a result, during the operation to install the reaction container 50, the state where the first end part 50c and the first pressed part 43 are contacted with each other can be maintained and the detachment of the first end part 50c from the first pressed part 43 can be prevented.

The opening/closing member 40 is configured to move to the first position P1 in conjunction with the operation to move the second end part 50d of the reaction container 50 into the depressed portion 11 while pressing the first end part 50c of the reaction container 50 against the first pressed part 43 in the depressed portion 11. The second end part 50d is an end part of the reaction container 50, which is located on a side closer to the specimen accommodation section 51 (i.e., the X2 direction side). The second end part 50d is a lower end part of the side surface plate 58b of the reaction container 50. The first end part 50c and the second end part 50d are end parts of the reaction container 50 as observed in the length direction (i.e., the X-axis direction).

As shown in Fig. 5, when the reaction container 50 is to be installed in the first installation unit 10, a user makes the first end part 50c of the reaction container 50 to engage with the first pressed part 43 and then moves the second end part 50d which is closer to the specimen accommodation section 51 in a downward direction toward the inside of the depressed portion 11. At this time, the reaction container 50 moves so as to be rotated about a position adjacent to an edge part EP of the opening 11a of the first installation unit 10. As a result, as shown in Fig. 6, the first end part 50c moves to the X1 direction side together with the first pressed part 43 to cause the opening/closing member 40 to move to the first position P1.

In this manner, a user can install the reaction container 50 by performing the operation to incline the reaction container 50 in such a manner that the first end part 50c of the reaction container 50 contacts with the first pressed part 43 in the depressed portion 11 and the second end part 50d is located above the depressed portion 11 (see Fig. 5) and to move the second end part 50d into the depressed portion 11 to fit the reaction container 50 in the depressed portion 11. In this case, the user holds a second end part 50d side of the reaction container 50 to move the reaction container 50, while the opening/closing member 40 is moved upon the contact with the first end part 50c of the reaction container 50. Therefore, it becomes possible to ensure the movement of the opening/closing member 40 in conjunction with the operation to install the reaction container 50 while avoiding the undesired contact of the user with the opening/closing member 40.

According to this configuration, the opening/closing member 40 is moved from the second position P2 (see Fig. 5) to the first position P1 (see Fig. 6) in conjunction with the operation to install the reaction container 50 in the first installation unit 10.

### <Movement to second position>

The opening/closing member 40 is configured to move from the first position P1 to the second position P2 in conjunction with the operation to remove the reaction container 50 from the first installation unit 10. According to this configuration, the opening/closing member 40 moves automatically to the second position P2 in the state where the reaction container 50 is removed from the first installation unit 10 without requiring for a user to perform any special operation. Therefore, the contact of a user with the temperature adjusting unit 20 can be prevented when the reaction container 50 is not installed.

More specifically, as shown in Figs. 5 and 6, the measurement device 100 includes a first biasing member 190 for biasing the opening/closing member 40 to the second position P2. The opening/closing member 40 is configured to be held at the first position P1 (see Fig. 6) against a biasing force of the first biasing member 190 upon the pressing of the reaction container 50, and to move to the second position P2 by the biasing force of the first biasing member 190 upon the removal of the reaction container 50.

According to this configuration, unlike a configuration in which the removal of the reaction container 50 is detected with a sensor or the like and the opening/closing member 40 is moved with a motor or the like, the opening/closing member 40 can be moved mechanically to the second position P2 by the biasing force of the first biasing member 190. As a result, the opening/closing member 40 can be placed at the second position P2 reliably even in the case of power failure due to the disable functioning of a sensor or a motor. Therefore, it becomes possible to reliably prevent a user from contacting with the temperature adjusting unit 20 even when the measurement device 100 works normally as well as under abnormal conditions such as power failure.

In the example shown in Figs. 5 and 6, the first biasing member 190 is a compression coil spring, in which one end is fixed to the first installation unit 10 and the other end is connected to the opening/closing member 40 so as to bias the opening/closing member 40 to the second position P2 side (i.e., the X2 direction side). As shown in Fig. 6, while the opening/closing member 40 is located at the first position P1, the state where the first biasing member 190 is stretched is maintained. Upon the removal of the reaction container 50, in contact to the installation of the reaction container 50, the first end part 50c of the reaction container 50 is rotated to the X2 direction side in conjunction with the lifting up of the second end part 50d of the reaction container 50 as shown in Fig. 5. In conjunction with the movement of the first end part 50c to the X2 direction, the first biasing member 190 pulls the opening/closing member 40 to the X2 direction to move the opening/closing member 40 to the second position P2. The first biasing member 190 may be a compression coil spring or an elastic body, e.g., a rubber cushion, capable of pressing the opening/closing member 40 in the X2 direction.

### <Locking mechanism>

The locking mechanism 180 shown in Fig. 4 is configured that the movement of the opening/closing member 40 from the second position P2 to the first position P1 is regulated (i.e., locked) releasably. The locking mechanism 180 can be switched between a locked state where the locking mechanism 180 is engaged with the opening/closing member 40 positioned at the second position P2 to regulate the movement of the opening/closing member 40 to the first position P1 and an unlocked state where the engaging between the locking mechanism 180 with the opening/closing member 40 is released to release the regulation of the movement of the opening/closing member 40 to the first position P1. In the locked state, the opening/closing member 40 does not move even when the opening/closing member 40 is pressed in the X1 direction against the first position P1.

The locking mechanism 180 is configured that the regulation of the movement of the opening/closing member 40 is released in conjunction with the operation to install the reaction container 50 in the first installation unit 10. In this manner, the unintended movement of the opening/closing member 40 to the first position P1 can be prevented by the locking mechanism 180. Therefore, the contact of a user with the temperature adjusting unit 20 can be prevented more reliably. When the reaction container 50 is to be installed in the first installation unit 10, the regulation of the movement can be released easily only by performing the operation to install the reaction container 50 in the first installation unit 10 by a user without requiring to perform any special unlocking operation.

More specifically, as shown in Fig. 4, the locking mechanism 180 includes a second pressed part 183 which is pressed against the reaction container 50 in conjunction with the operation to install the reaction container 50 in the first installation unit 10 to release the regulation of the movement. The second pressed part 183 contacts with a part of the reaction container 50 and is pressed by the moving reaction container 50 during the installation of the reaction container 50 in the first installation unit 10. The locking mechanism 180 is switched between a locked state and an unlocked state by moving the second pressed part 183 by a pressing force. Therefore, the regulation of the movement by the locking mechanism 180 can be released through the reaction container 50 without requiring for a user to directly contact with the locking mechanism 180. As a result, it becomes possible to prevent foreign matters from being stuck in the locking mechanism 180 or to prevent the operation of the release of the locking mechanism 180 from being interrupted by the contact with a user. Furthermore, because the operation to install the reaction container 50 in the first installation unit 10 can be detected mechanically by the direct contact of the reaction container 50 with the locking mechanism 180, it is not required to detect the operation to install in the first installation unit 10 electrically with a sensor or the like and it can be prevented the regulation from being complicated.

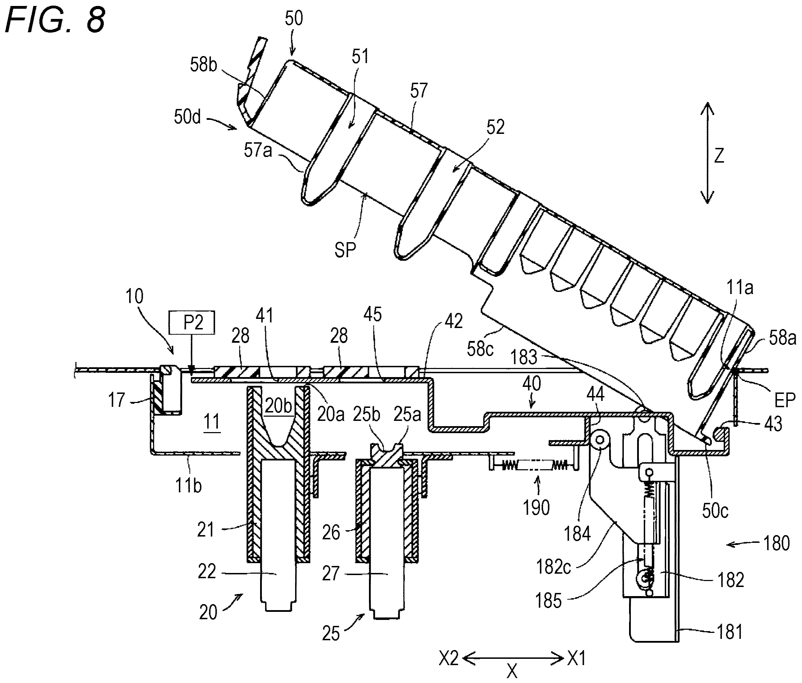

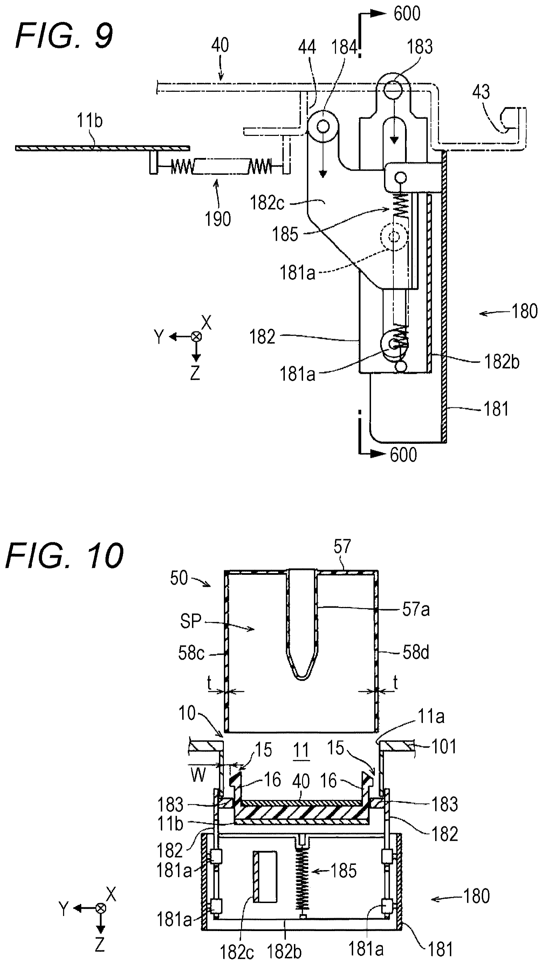

As shown in Fig. 8, the locking mechanism 180 includes a supporting part 181 which is fixed to the first installation unit 10 and a movable part 182 which is supported movably by the supporting part 181, and the second pressed part 183 is provided in the movable part 182. As shown in Figs. 9 and 10, the supporting part 181 includes a plurality of guide rollers 181a which are engaged with the movable part 182. As a result, the movable part 182 can move linearly in the vertical direction relative to the supporting part 181. The second pressed part 183 is an axis member arranged so as to project in the horizontal direction at an upper end part of the movable part 182.

As shown in Fig. 10, one movable part 182 is provided at a position which corresponds to each of both Y-axis-direction sides relative to the support plate 11b in the first installation unit 10. The two movable parts 182 are connected to each other through a plate-like connecting plate 182b and are formed integrally. The second pressed part 183 is arranged so as to project from each of the movable parts 182 toward the Y-axis direction center side in the depressed portion 11. In other words, a pair of second pressed parts 183 is formed so as to contact with a lower end part of the side surface plate 58c and a lower end part of the side surface plate 58d (see Fig. 10), respectively, of the reaction container 50.

As shown in Fig. 9, with respect to the X-axis direction positioning, the pair of second pressed parts 183 are arranged on a side closer to the temperature adjusting unit 20 than the first pressed part 43 in the opening/closing member 40 in the depressed portion 11. In Fig. 8, when the second end part 50d is moved in a downward direction while engaging the first end part 50c of the reaction container 50 with the first pressed part 43, a lower end part of each of the side surface plates 58c and 58d (see Fig. 10) contacts with each of the second pressed parts 183 during the movement of the second end part 50d. The second pressed part 183 is moved in a downward direction with the movement of the second end part 50d in a further downward direction. As the result of this movement of the second pressed part 183 in a downward direction, the locking mechanism 180 is switched into an unlocked state.

More specifically, the locking mechanism 180 includes a locking part 184 which is configured to lock the opening/closing member 40 at the second position P2 and to move integrally with the second pressed part 183. The locking part 184 is configured to move to a position at which the locking of the opening/closing member 40 is released in conjunction with the movement of the second pressed part 183 pressed by the reaction container 50. In this manner, the regulation of movement and the release of the regulation of movement by the locking mechanism 180 can be performed completely mechanically. Therefore, it is not required to use an actuator such as a solenoid, and any treatment for controlling the locking mechanism 180 is not required.

The locking part 184 is arranged at a position immediately below the opening/closing member 40. In the opening/closing member 40, an abutting surface 44 is formed to project in a downward direction at a position located between a region in which the first pressed part 43 is formed and a region in which the through-hole 41 is formed. The locking part 184 contacts with the abutting surface 44 in the X-axis direction to lock the movement of the opening/closing member 40 in the X1 direction toward the first position P1.

As shown in Fig. 9, the locking part 184 is connected to the connecting plate 182b through a bracket 182c in such a manner that the locking part 184 moves integrally with the movable part 182. When the second pressed part 183 is pressed in a downward direction upon the contact with the reaction container 50, the locking part 184 also moves in a downward direction together with the second pressed part 183. When the locking part 184 moves to a downward position at which the locking part 184 does not contact with the abutting surface 44 of the opening/closing member 40, the opening/closing member 40 can move on the X-axis direction toward the first position P1. According to this configuration, the locking mechanism 180 is switched to an unlocked state in conjunction with the operation to install the reaction container 50 in the first installation unit 10.

The locking mechanism 180 is configured to be switched from a state where the regulation of the movement of the opening/closing member 40 is released to a state where the movement of the opening/closing member 40 is regulated in conjunction with the operation to remove the reaction container 50 from the first installation unit 10. According to this configuration, the movement of the opening/closing member 40 to the second position P2 is regulated automatically while removing the reaction container 50 from the first installation unit 10, without requiring for a user to perform any special operation. As a result, when the reaction container 50 is removed from the first installation unit 10, it can be prevented reliably for the regulation of movement by the locking mechanism 180 from not being carried out by accident.

More specifically, as shown in Figs. 9 and 10, the locking mechanism 180 includes a second biasing member 185 for biasing the locking part 184 to a position at which the opening/closing member 40 is engaged. The locking part 184 is configured to be held at a position at which the locking of the opening/closing member 40 is released against a biasing force of the second biasing member 185 upon the pressing of the reaction container 50 against the second pressed part 183, and to move to a position at which the opening/closing member 40 is locked by a biasing force of the second biasing member 185 upon the removal of the reaction container 50.

According to this configuration, unlike a configuration in which the removal of the reaction container 50 is detected with a sensor or the like and the locking mechanism 180 is controlled electrically, the locking mechanism 180 can be mechanically switched to a state where the movement of the opening/closing member 40 is regulated by a biasing force of the second biasing member 185. The locking mechanism 180 can be made in a regulated state even in the case of power failure due to the disable functioning of a sensor or a motor.

In the example shown in Figs. 8 to 10, the second biasing member 185 is an extension coil spring, in which the upper end is fixed to the supporting part 181 and the lower end is connected to the connecting plate 182b. According to this configuration, the second biasing member 185 biases the movable part 182 including the locking part 184 and the second pressed part 183 in the vertical direction. When the reaction container 50 is not installed in the first installation unit 10, each if the locking part 184 and the second pressed part 183 is held at an upper end position located in a movable area by means of the second biasing member 185. The upper end position is a position at which the locking part 184 locks the movement of the opening/closing member 40 (i.e., a position at which the locking part 184 abuts on the abutting surface 44), and is also a position at which the second pressed part 183 can contact with the reaction container 50 installed in the depressed portion 11. Upon the downward movement of the movable part 182 as the result of the pushing of the second pressed part 183 by the reaction container 50, the second biasing member 185 is stretched. While the reaction container 50 is installed in the first installation unit 10, the second biasing member 185 is kept in a stretched state.

In the removal of the reaction container 50, when the reaction container 50 is lifted up, contrary to the case of installation, the second biasing member 185 pulls the movable part 182 in an upward direction and moves the movable part 182 to the upper end position. In this manner, the locking mechanism 180 is switched from an unlocked state to a locked state. The second biasing member 185 may be a compression coil spring or an elastic body such as a rubber cushion for pressing the movable part 182 in an upward direction.

As mentioned above, in this embodiment, the configuration for moving the opening/closing member 40 and the configuration for turning on or off the locking mechanism 180 are achieved by a mechanical structure which does not require any electric signal processing or regulation processing. Therefore, each of the movement of the opening/closing member 40 and the on/off switching of the locking mechanism 180 is achieved by a sensorless structure or an actuatorless structure. Therefore, a trouble which may occur in the case where the structure includes a sensor or an actuator that requires any electrical signal processing or regulation processing, i.e., a trouble that a user contacts with the temperature adjusting unit 20 and the temperature adjusting unit 25 as the result of the matter that the opening/closing member 40 cannot be closed at a proper timing due to the malfunctioning of the sensor or the operation failure of the actuator, can be prevented reliably.

### <Passage part>

In the configuration example shown in Figs. 4 to 10, the switching of the locking mechanism 180 to an unlocked state is carried out by employing a structure which cannot be operated directly with a hand of a user. That is, the measurement device 100 is configured that, when the reaction container 50 is not installed in the first installation unit 10, a user cannot operate the second pressed part 183 in the depressed portion 11 by directly contacting with the second pressed part 183 and the second pressed part 183 can be operated through the reaction container 50.

More specifically, as shown in Fig. 4, the first installation unit 10 includes a passage part 15 through which the reaction container 50 (see Fig. 3) passes when the reaction container 50 presses the second pressed part 183. The passage part 15 is formed in such a shape that a part of the reaction container 50 can pass therethrough and the passage of a finger of an operator is inhibited. According to this configuration, a user can be prevented from contacting with the second pressed part 183 by accident, and the regulated state of the locking mechanism 180 can be released only when the operation to install the reaction container 50 in the first installation unit 10 is carried out.

In the example shown in Fig. 4, a wall-like member 16 which extends along the edge part of the opening 11a is provided in the depressed portion 11. The wall-like member 16 forms the passage part 15 in the depressed portion 11. The wall-like member 16 has a plate-like shape extending in the X-axis direction and the Z-axis direction. The wall-like member 16 is formed to lie across at least the both sides of the X-axis direction relative to the installation position of the second pressed part 183. The wall-like member 16 lies from the bottom part of the depressed portion 11 to a position which is located above the second pressed part 183.

As shown in Fig. 10, the wall-like members 16 are arranged at a distance corresponding to the Y-axis direction width W away from each other between the edge parts of the opening 11a. The passage part 15 is a region corresponding to a gap between the edge part of the opening 11a and the wall-like member 16. Two passage parts 15 are provided on both Y-axis direction sides in the depressed portion 11, respectively, by two wall-like members 16. In the inside of each of the passage parts 15, one second pressed part 183 is arranged. The width W of the passage part 15 is adjusted to a value that is larger than the thickness t of the side surface plates 58c and 58d of the reaction container 50 and is sufficiently smaller than the diameter of a human finger. For example, the width W is a few mm. Therefore, it is impossible for a user to insert a finger of the user into the passage part 15 to press down the second pressed part 183 directly, and the second pressed part 183 can be pressed down and can be unlocked only by allowing the side surface plates 58c and 58d of the reaction container 50 to pass through the passage part 15.

The upper surface of the wall-like member 16 is an inclined surface which inclines downward toward the passage part 15 side. Therefore, the wall-like member 16 has a function to guide the side surface plates 58c and 58d of the reaction container 50 to enter the passage part 15.

The upper part of each of the locking part 184 (see Fig. 9) and the connecting plate 182b of the locking mechanism 180 is covered with the opening/closing member 40, and therefore a user cannot contact directly with these parts.

### (Operations to install reaction container and operation to remove reaction container)

Next, the operation to install the reaction container 50 to the first installation unit 10 and the operation to remove the reaction container 50 from the first installation unit 10 will be described.

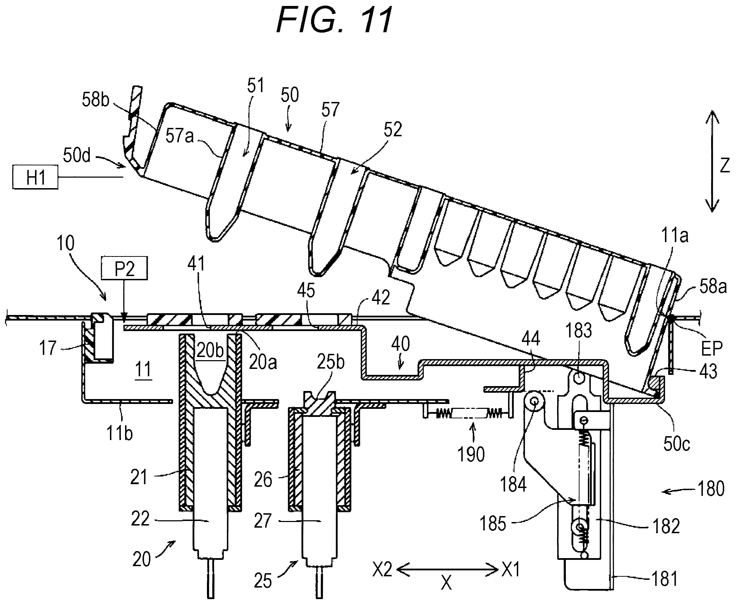

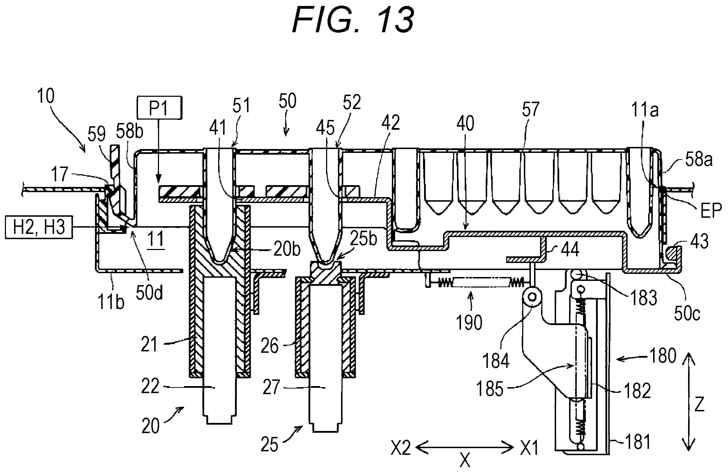

In this embodiment, upon the installation of the reaction container 50 in the depressed portion 11, the locking mechanism 180 releases the regulation of the movement of the opening/closing member 40 when the reaction container 50 reaches a first height position H1(see Fig. 11). When the reaction container 50 reaches a second height position H2 (see Fig. 13) that is located below the first height position HI, the opening/closing member 40 moves to the first position P1. When the reaction container 50 reaches a third height position H3 (see Fig. 13) that is located at the same level as the second height position H2 or below the second height position H2, the specimen accommodation section 51 in the reaction container 50 is placed on the temperature adjusting unit 20.

In this manner, the release of the regulation of the movement of the locking mechanism 180 and the movement of the opening/closing member 40 to the first position P1 is achieved in this order just by moving the reaction container 50 to the inside of the depressed portion 11 by a user in the operation to install the reaction container 50 in the first installation unit 10. Therefore, the contact of a user with the temperature adjusting unit 20 can be prevented without deteriorating the convenience of the measurement device 100. In Fig. 13, an example is shown, in which the third height position H3 is located at the same level as the second height position H2. However, the third height position H3 may be a height position located below the second height position H2. In this embodiment, the first height position HI, the second height position H2 and the third height position H3 will be described employing the height position of the second end part 50d as a reference point.

The operation to install the reaction container 50 will be described in detail. As shown in Fig. 8, when the reaction container 50 is to be installed, a user holds the second end part 50d side of the reaction container 50 and engages the first end part 50c with the first pressed part 43 in the depressed portion 11. At this time, the side surface plates 58c and 58d of the reaction container 50 (see Fig. 10) are inserted in the passage parts 15 in the depressed portion 11, respectively.

When the first end part 50c is engaged with the first pressed part 43, the user makes the second end part 50d to move in a downward direction. The reaction container 50 is moved so as to rotate in the clockwise direction about the edge part EP of the opening 11a. As a result, the side surface plates 58c and 58d (see Fig. 10) inserted in the passage parts 15 contact with the second pressed part 183 in the locking mechanism 180 to push down the movable part 182 in a downward direction.

As shown in Fig. 11, when the second end part 50d reaches the first height position HI, the locking part 184 evacuates to a downward position at which the locking part 184 never contacts with the abutting surface 44 of the opening/closing member 40. As a result, the locking mechanism 180 becomes in an unlocked state where the regulation of the movement of the opening/closing member 40 is released.

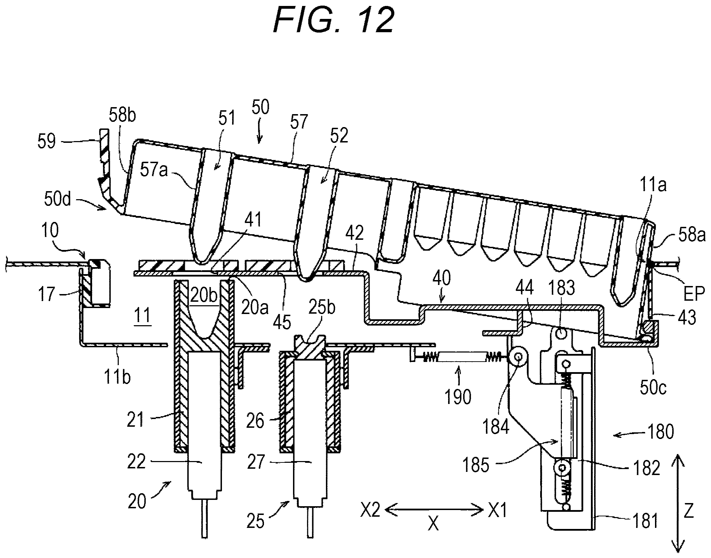

As shown in Fig. 12, the user makes the second end part 50d to move in a further downward direction from the first height position H1 (see Fig. 11). The first end part 50c rotates in the X1 direction about the edge part EP. As a result, the opening/closing member 40 engaged with the first end part 50c is moved in the X1 direction toward the first position P1 (see Fig. 13).

As shown in Fig. 13, when the second end part 50d reaches the second height position H2, the opening/closing member 40 is positioned at the first position P1. The through-hole 41 in the opening/closing member 40 is arranged immediately above the installation hole 20b in the temperature adjusting unit 20, so that the specimen accommodation section 51 in the reaction container 50 can be placed in the installation hole 20b through the through-hole 41. The reagent accommodation section 52 in the reaction container 50 can also be placed in the installation hole 25b through the through-hole 45. In Fig. 13, the third height position H3 is at the same level as the second height position H2. Therefore, a part of the reagent accommodation section 52 enters the inside of the through-hole 45 at a timing which is before the placement of the through-hole 41 and the through-hole 45 immediately above the installation hole 20b and the installation hole 25b, respectively, as shown in Fig. 12.

In Fig. 13, when the opening/closing member 40 is placed at the first position P1, the specimen accommodation section 51 in the reaction container 50 is placed at a proper position in the installation hole 20b in the temperature adjusting unit 20 through the through-hole 41. Similarly, the reagent accommodation section 52 in the reaction container 50 is placed at a proper position in the installation hole 25b through the through-hole 45. The upper surface plate 57 of the reaction container 50 becomes approximately horizontal when the second end part 50d is positioned at the second height position H2 and the third height position H3.

In this manner, a user can perform all of a series of operations, i.e., the operation to release the regulation of the movement by the locking mechanism 180, the operation to move the opening/closing member 40 to the first position P1, and the operation to install the specimen accommodation section 51 in the temperature adjusting unit 20 (and the operation to install the reagent accommodation section 52 in the temperature adjusting unit 25) only by a single action, i.e., an action to move the second end part 50d in a downward direction from the upper part into the depressed portion 11.

As shown in Fig. 13, the first installation unit 10 includes an engaging member 17 capable of being engaged with the second end part 50d positioned at the third height position H3. At the second end part 50d of the reaction container 50, a releasing lever 59 having an engaging part is provided. The releasing lever 59 is engaged with the engaging member 17 by snap fitting utilizing elastic deformation. The first end part 50c is still engaged with the first pressed part 43 in the opening/closing member 40. The misalignment of the reaction container 50 and the unintended detachment of the reaction container 50 from the first installation unit 10 is prevented by the engagement with the first end part 50c and the second end part 50d. In Fig. 3, the illustration of the releasing lever 59 is omitted.

The operation to remove the reaction container 50 from the first installation unit 10 is carried out in reverse order of the order employed for the above-mentioned installation operation. A user lifts up the second end part 50d in an upward direction while pressing the releasing lever 59 in the reaction container 50 to release the engagement with the engaging member 17. In the process of moving the second end part 50d upward from the second height position H2 and the third height position H3 (see Fig. 12), the specimen accommodation section 51 and the reagent accommodation section 52 are drawn upward from the corresponding through-holes 41 and the corresponding through-hole 45, respectively. When the second end part 50d reaches the first height position H1 (see Fig. 11), the opening/closing member 40 is placed at the second position P2 (see Fig. 11) by a biasing force of the first biasing member 190. When the second end part 50d goes above the first height position H1 (see Fig. 11), the locking part 184 in the locking mechanism 180 reaches a position at which the locking part 184 contacts with the abutting surface 44 of the opening/closing member 40 to switch the state of the locking mechanism 180 from an unlocked state to a locked state. Subsequently, the user pulls out the first end part 50c of the reaction container 50 from the first pressed part 43 in the opening/closing member 40 to release the engagement, whereby the reaction container 50 is removed from the first installation unit 10.

In this manner, in the process of the operation to remove the reaction container 50 from the first installation unit 10 by a user, the opening/closing member 40 moves to the second position P2 (see Fig. 11) to switch the state of the locking mechanism 180 to a locked state. As a result, at a point of time at which the user removes the reaction container 50 from the first installation unit 10, the opening/closing member 40 covers the upper surface 20a (see Fig. 11) of the temperature adjusting unit 20 and the movement of the opening/closing member 40 becomes in a regulated state, and therefore the contact of the user with the temperature adjusting unit 20 is prevented reliably.

### (Control unit)

Next, the configuration relating to the control of the measurement device 100 will be described. As shown in Fig. 14, the measurement device 100 includes an analysis unit 300, a storage unit 310, a display unit 320, an input unit 330, a control unit 340, an interface 350, a driving unit 360, a sensor unit 370, and a temperature adjusting unit 380.

The analysis unit 300 is composed of a CPU. When the analysis unit 300 receives a start instruction via the input unit 330, the analysis unit 300 sends an instruction signal to start a measurement processing to the control unit 340. The analysis unit 300 generates a plurality of time-series data representing a nucleic acid amplification reaction occurring each of the accommodation sections 212 in the second container 210 (see Fig. 2) from an electric signal of fluorescent light detected by the measurement unit 30. The analysis unit 300 determines as to the positivity or negativity with respect to a detection target nucleic acid in which a detection target site in a nucleic acid is mutated, on the basis of the generated time-series data.

The storage unit 310 is composed of a RAM, a ROM, a hard disk and the like. The display unit 320 is composed of a display device. The input unit 330 is composed of a human interface device such as a keyboard and a mouse. The display unit 320 and the input unit 330 may be together composed of a touchscreen-type display.

The control unit 340 is composed of a CPU or a microcomputer. The control unit 340 controls a dispensing unit 110, a transfer unit 130, a rotating mechanism 140, a measurement unit 30, a temperature adjusting unit 380, a driving unit 360 and a sensor unit 370 via an interface 350. The temperature adjusting unit 380 includes a temperature adjusting unit 20 (see Fig. 2), a temperature adjusting unit 25 (see Fig. 2), and a temperature adjusting unit 150 (see Fig. 2). The driving unit 360 includes various driving units arranged in the measurement device 100. The sensor unit 370 includes various sensors arranged in the measurement device 100.

### [Processing operation of measurement device]

Next, the processing operation of the measurement device 100 will be described.

As shown in Fig. 2, in the analysis of a specimen by the measurement device 100, a user installs a new reaction container 50 in a first installation unit 10, and places the specimen in the specimen accommodation section 51 in the reaction container 50. The specimen is an FFPE tissue section, as mentioned above. The user places ethanol in a reagent accommodation section 55. The user installs a new second container 210 in a second installation unit 160. The new second container 210 contains reagents for respectively amplifying and fluorescently labeling different detection target nucleic acids in the accommodation sections 212, respectively. The user installs a new third container 220 in a third installation unit 170.

For the treatment of a single specimen, a set consisting of the first installation unit 10, the second installation unit 160 and the third installation unit 170 which are aligned in line along the X-axis direction is used. When a user performs the nucleic acid analyses of a plurality of specimens in parallel, the reaction container 50, the second container 210 and the third container 220 are arranged for each of a plurality of the sets. Hereinbelow, the procedure for the nucleic acid analysis in a single set will be described. With respect to the configuration of the measurement device 100, see Fig. 2.

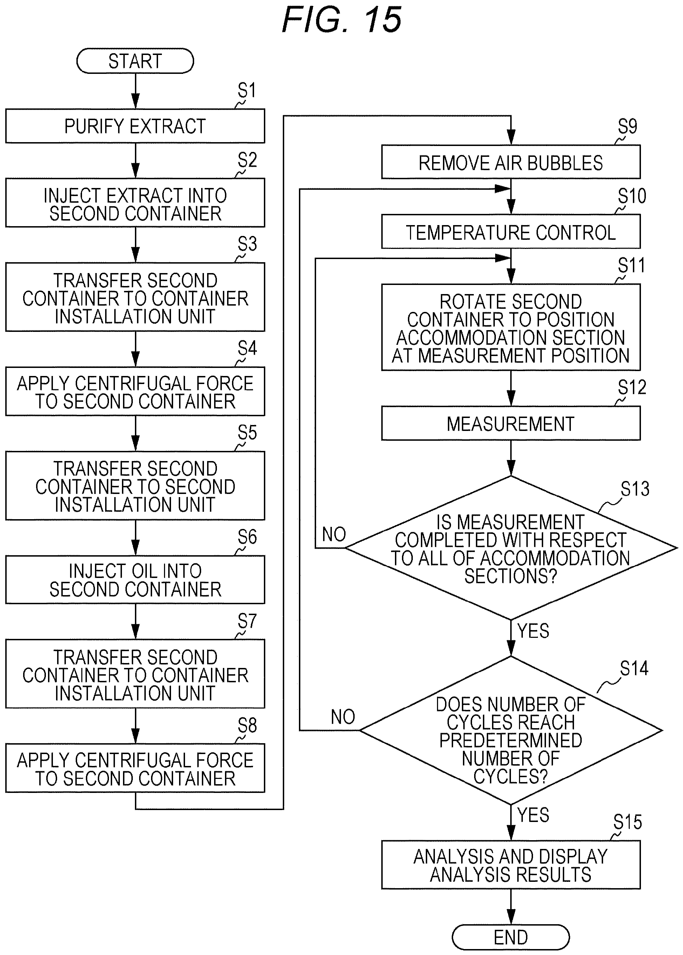

As shown in Fig. 15, upon the start of the analysis of a nucleic acid, the control unit 340 drives the dispensing unit 110 to attach a sticking chip 221 to a sucking section 111. The control unit 340 drives the dispensing unit 110 to stick the sticking chip 221 into an aluminum seal AS (see Fig. 3), thereby opening an upper part of each of the reagent accommodation section 52, the reagent accommodation sections 53a to 53h and the waste solution accommodation section 56 in the reaction container 50.

In step S1, the control unit 340 drives the dispensing unit 110 to purify an extract in the reaction container 50. In the dispensing procedure mentioned below, the attachment and replacement of pipetting chips 222 for the sucking section 111 are carried out appropriately, and the suction and ejection of a liquid is carried out by the sucking section 111 through the pipetting chips 222.

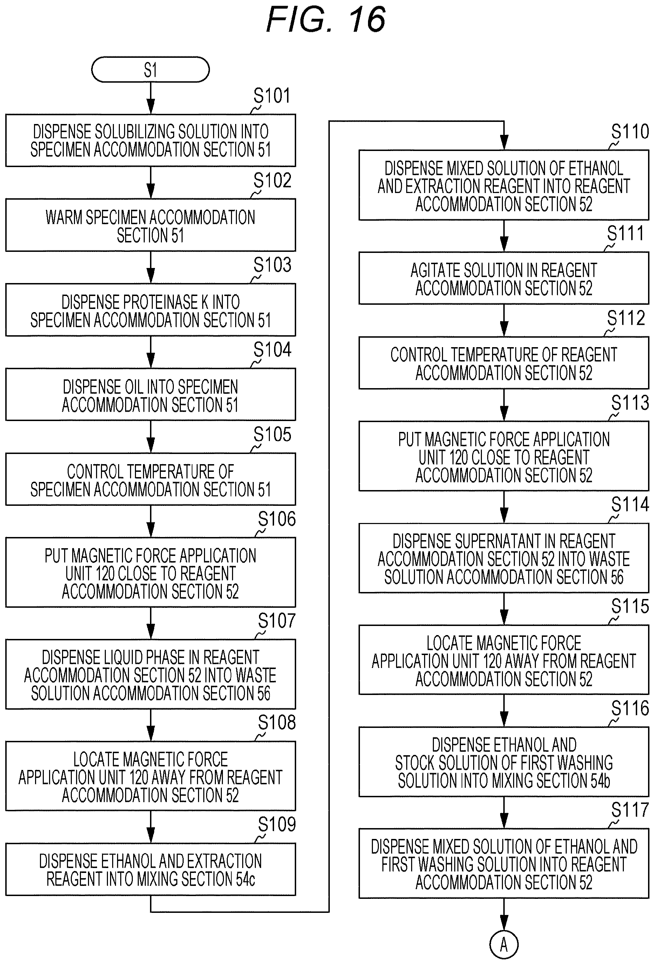

More specifically, the control unit 340 performs the below-mentioned control in step S1. In step S101 shown in Fig. 16, the control unit 340 controls the dispensing unit 110 in such a manner that a solubilizing solution in the reagent accommodation section 53a is dispensed into the specimen accommodation section 51. In this manner, an FFPE section is immersed in the solubilizing solution. In step S102, the control unit 340 controls the temperature adjusting unit 20 to warm the specimen accommodation section 51. The control unit 340 raises the temperature of the temperature adjusting unit 20 to about 90°C to 100°C. As a result, the temperature of the specimen accommodation section 51 in the reaction container 50 increases to about 90°C. In this manner, paraffin, which is an embedding agent, is melted.

Next, in step S103, the control unit 340 controls the dispensing unit 110 in such a manner that proteinase K in the reagent accommodation section 53b is dispensed into the specimen accommodation section 51. In step S104, the control unit 340 controls the dispensing unit 110 in such a manner that an oil in the reagent accommodation section 53c is dispensed into the specimen accommodation section 51. The oil in the reagent accommodation section 53c is mineral oil. Subsequently, in step S105, the control unit 340 adjusts the temperature of the specimen accommodation section 51 by means of the temperature adjusting unit 20. For example, the control unit 340 keeps the temperature of the temperature adjusting unit 20 at about 90°C to 100°C. The temperature of the specimen accommodation section 51 in the reaction container 50 is kept at about 90°C. When a predetermined time is allowed to pass while warming, a protein in the specimen accommodation section 51 is decomposed and a nucleic acid is extracted from cells.

Next, in step S106, the control unit 340 puts a magnetic force application unit 120 close to the reagent accommodation section 52. As a result, magnetic particles in the reagent accommodation section 52 are gathered on the inner wall surface of the reagent accommodation section 52. Subsequently, in step S107, the control unit 340 controls the dispensing unit 110 to transfer a liquid phase (a magnetic particles storing solution) in the reagent accommodation section 52 to the waste solution accommodation section 56. In step S108, the control unit 340 locates the magnetic force application unit 120 away from the reagent accommodation section 52. Subsequently, in step S109, the control unit 340 drives the dispensing unit 110 to dispense ethanol in the reagent accommodation section 55 and an extraction reagent in the reagent accommodation section 53e into a mixing section 54c. In step S110, the control unit 340 drives the dispensing unit 110 to dispense a mixed solution of ethanol and the extraction reagent accommodated in the mixing section 54c into the reagent accommodation section 52.

Subsequently, in step S111, the control unit 340 drives the dispensing unit 110 to move a solution in the specimen accommodation section 51 to the reagent accommodation section 52 and repeat the suction and ejection of the solution in the reagent accommodation section 52 to agitate the solution in the reagent accommodation section 52. Subsequently, in step S112, the control unit 340 controls the temperature adjusting unit 25 to adjust the temperature of the reagent accommodation section 52. In this manner, the nucleic acid is supported on the magnetic particles. Subsequently, in step S113, the control unit 340 puts the magnetic force application unit 120 close to the reagent accommodation section 52. As a result, magnetic particles in the reagent accommodation section 52 are gathered on the wall surface of the reagent accommodation section 52. Subsequently, in step S114, the control unit 340 controls the dispensing unit 110 to suck a supernatant in the reagent accommodation section 52 and transfer the sucked liquid to the waste solution accommodation section 56. In step S115, the control unit 340 locates the magnetic force application unit 120 away from the reagent accommodation section 52.

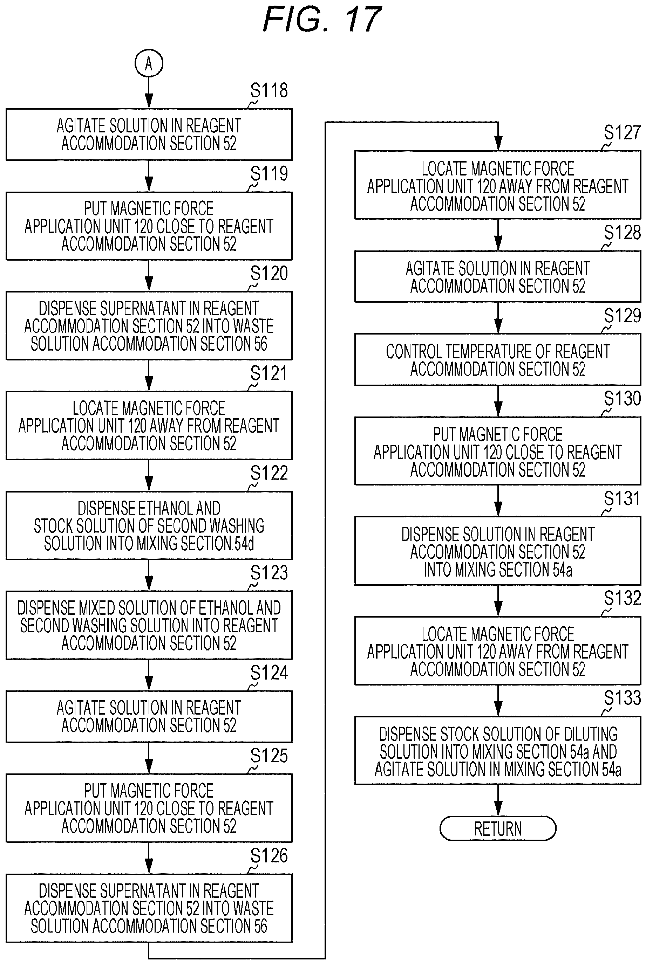

Subsequently, in step S116, the control unit 340 drives the dispensing unit 110 to dispense ethanol in the reagent accommodation section 55 and a stock solution of a first washing solution in the reagent accommodation section 53h into the mixing section 54b. In step S117, the control unit 340 drives the dispensing unit 110 to dispense a mixed solution of ethanol and the first washing solution and accommodated in the mixing section 54b to the reagent accommodation section 52. Subsequently, in step S118 shown in Fig. 17, the control unit 340 controls the dispensing unit 110 to agitate the solution in the reagent accommodation section 52. Subsequently, in step S119, the control unit 340 puts the magnetic force application unit 120 close to the reagent accommodation section 52. Subsequently, in step S120, the control unit 340 controls the dispensing unit 110 to suck a supernatant in the reagent accommodation section 52 and transfer the sucked liquid to the waste solution accommodation section 56. In step S121, the control unit 340 locates the magnetic force application unit 120 away from the reagent accommodation section 52.

Similarly, in step S122, the control unit 340 controls the dispensing unit 110 to dispense ethanol in the reagent accommodation section 55 and a stock solution of a second washing solution in the reagent accommodation section 53f to the mixing section 54d. In step S123, the control unit 340 controls the dispensing unit 110 to dispense a mixed solution of ethanol and the second washing solution and accommodated in the mixing section 54d to the reagent accommodation section 52. Subsequently, in step S124, the control unit 340 controls the dispensing unit 110 to agitate the solution in the reagent accommodation section 52. Subsequently, in step S125, the control unit 340 puts the magnetic force application unit 120 close to the reagent accommodation section 52. Subsequently, in step S126, the control unit 340 controls the dispensing unit 110 to suck a supernatant in the reagent accommodation section 52 and transfer the sucked liquid to the waste solution accommodation section 56. In step S127, the control unit 340 moves the magnetic force application unit 120 away from the reagent accommodation section 52. In this manner, impurities in the reagent accommodation section 52 is washed. The washing of the impurities may be omitted.

Next, in step S128, the control unit 340 controls the dispensing unit 110 to dispense an eluent in the reagent accommodation section 53d into the reagent accommodation section 52 and agitate the sample solution in the reagent accommodation section 52. Subsequently, in step S129, the control unit 340 drives the temperature adjusting unit 20 to adjust the temperature of the reagent accommodation section 52. As a result, the nucleic acid in the reagent accommodation section 52 is eluted from the magnetic particles.

Next, in step S130, the control unit 340 puts the magnetic force application unit 120 close to the reagent accommodation section 52. As a result, magnetic particles in the reagent accommodation section 52 are gathered on the wall surface of the reagent accommodation section 52. Subsequently, in step S131, the control unit 340 controls the dispensing unit 110 to transfer the solution in the reagent accommodation section 52 to the mixing section 54a. In step S132, the control unit 340 puts the magnetic force application unit 120 away from the reagent accommodation section 52. Subsequently, in step S133, the control unit 340 controls the dispensing unit 110 to dispense a stock solution of a diluting solution in the reagent accommodation section 53g to the mixing section 54a and agitate the solution in the mixing section 54a. In this manner, the concentration of the sample in the mixing section 54a is adjusted and an extract is formed.

In step S2 shown in Fig. 15, the control unit 340 controls the dispensing unit 110 to inject the extract in the mixing section 54a into an injection port 211 in the second container 210 installed in the second installation unit 160. In step S3, the control unit 340 controls a transfer unit 130 to transfer the second container 210 installed in the second installation unit 160 to a container installation unit 141 in the rotating mechanism 140. In step S4, the control unit 340 controls the rotating mechanism 140 to rotate the second container 210 at a high speed, thereby applying a centrifugal force to the second container 210. The rotating mechanism 140 rotates the second container 210, for example, at 4500 rpm for 5 seconds.

In step S5, the control unit 340 controls the transfer unit 130 to transfer the second container 210 rotated by the rotating mechanism 140 to the second installation unit 160. In step S6, the control unit 340 drives the dispensing unit 110 to inject an oil in the reagent accommodation section 53c into the injection port 211 in the second container 210 that has been transferred to the second installation unit 160 from the rotating mechanism 140.

Subsequently, in step S7, the control unit 340 controls the transfer unit 130 to transfer the second container 210 into which the oil has been injected to the container installation unit 141 in the rotating mechanism 140 again. In step S8, the control unit 340 controls the rotating mechanism 140 to rotate the second container 210 at a high speed, thereby imparting a centrifugal force to the second container 210. The rotating mechanism 140 rotates the second container 210, for example, at 4500 rpm for 3 seconds. In this manner, air in the flow path 213 in the second container 210 is replaced by the oil injected through the injection port 211.

Next, in steps S9 to S15, the detection of a nucleic acid amplification reaction and the analysis of a nucleic acid are carried out. Hereinbelow, an example in which the detection and the analysis are carried out on the basis of the principle of a BNA clamp PCR will be described. The principle of the detection and the analysis is not limited to that of the BNA clamp PCR, and may be, for example, the principle of PCR+Invader.

In step S9, the control unit 340 performs a treatment for removing air bubbles in the second container 210. The control unit 340 raises the temperature of the temperature adjusting unit 150 to 94°C and then decreases the temperature of the temperature adjusting unit 150 to 57°C. In this manner, the temperature of the second container 210 is increased to about 94°C and then decreased to about 57°C.

Subsequently, the control unit 340 drives the rotating mechanism 140 to rotate the second container 210 at a high speed. The rotating mechanism 140 rotates the second container 210, for example, at 4500 rpm for 5 seconds. In this manner, a centrifugal force is applied to the second container 210 to remove air bubbles in the second container 210 through the injection port 211.

In step S10, the control unit 340 raises the temperature of the temperature adjusting unit 150 to 94°C and then decreases the temperature of the temperature adjusting unit 150 to 57°C, thereby achieving the adjustment of the temperature of the second container 210. In this manner, the temperature of the second container 210 is increased to about 94°C and then decreased to about 57°C.

Subsequently, in step S11, the control unit 340 drives the rotating mechanism 140 to rotate the second container 210 in such a manner that the accommodation section 212 is positioned at a measurement position of the measurement unit 30. In step S12, the control unit 340 controls the measurement unit 30 to detect a nucleic acid amplification reaction occurring in the accommodation section 212. More specifically, the measurement unit 30 emits excitation light from a light source 33a toward the accommodation section 212, and fluorescent light generated in the accommodation section 212 is received by a light detector 33b. The control unit 340 acquires a fluorescence intensity on the basis of an electric signal output from the light detector 33b and makes the acquired fluorescence intensity to store in a storage unit 310.

In step S13, the control unit 340 determines as to whether or not the measurement in all of the accommodation sections 212 is completed. When the measurement in all of the accommodation sections 212 is not completed, the control unit 340 puts the processing back to step S11. In this case, in step S11, the control unit 340 drives the rotating mechanism 140 to rotate the second container 210 only by a pitch in the peripheral direction of the accommodation sections 212 in such a manner that an adjacent accommodation section 212 in which the detection is not completed yet is positioned at a measurement position. Subsequently, in step S12, the detection of the nucleic acid amplification reaction is carried out, as mentioned above.

In step S14, when the detection in all of the accommodation sections 212 is completed, the control unit 340 determines as to whether or not the number of cycles reaches a predetermined number of cycles. The term "cycle" as used herein refers to a processing composed of steps S10 to S13. The predetermined number of cycles is, for example, 55 cycles. When the number of cycles does not reach the predetermined number of cycles, the control unit 340 puts the processing back to step S10. Subsequently, the control unit 340 performs a cycle composed of steps S10 to S13 again.

In step S15, when the number of cycles reaches the predetermined number of cycles, the analysis unit 300 determines as to the presence or absence of the detection target nucleic acid in each of the accommodation sections 212, and displays the result of the determination or the like on a display unit 320. In this manner, the processing for the nucleic acid analysis of a single specimen is completed. When the processing for the nucleic acid analysis for a single specimen is completed, the control unit 340 drives the transfer unit 130 to transfer the second container 210 installed in the container installation unit 141 to the second installation unit 160. The transferred second container 210 is disposed after the completion of the processing operation.

Next, the analysis processing in step S15 will be described.

The analysis unit 300 produces a graph on the basis of time-series data which show fluorescence intensities in all of the cycles which are acquired from a single accommodation section 212. When the detection target nucleic acid is contained in the accommodation section 212, the detection target nucleic acid is amplified with the duration of cycles with the reagent contained in advance in the accommodation section 212. With the duration of cycles, the intensity of excited fluorescence increases. In contrast, when the detection target nucleic acid is not contained in the accommodation section 212, the detection target nucleic acid is never amplified even with the duration of cycles. As a result, the fluorescence intensity is kept at a low value regardless the duration of cycles.

The analysis unit 300 acquires the cycle threshold of the fluorescence intensity on the basis of the graph of the number of cycles and the fluorescence intensities produced above. The analysis unit 300 acquires a mutational burden on the basis of a graph showing the relationship between a cycle threshold and a mutation burden which has been stored in the storage unit 310 in advance. When the acquired mutational burden is equal to or larger than a cutoff value which has been stored in the storage unit 310, the analysis unit 300 determines the result of the detection target nucleic acid determination for the specimen accommodated in the accommodation section 212 as "positive". When the acquired mutational burden is smaller than the cutoff value which has been stored in the storage unit 310, the analysis unit 300 determines the result of the detection target nucleic acid determination for the specimen accommodated in the accommodation section 212 as "negative".

The analysis unit 300 displays the results of the analysis on the display unit 320. For example, the analysis unit 300 displays the results of the determination about the detection target nucleic acid corresponding to each of the accommodation sections 212 for every specimen in a tabulated form. The analysis unit 300 also displays a graph showing the number of cycles and the change in fluorescence intensities in an accommodation section 212 corresponding to a specimen selected from the tabulated determination results.

In this manner, the measurement device 100 performs especially the analysis of DNA. In this embodiment, the presence or absence of a mutation in KRAS that is one of cancer-associated genes, is determined for example. In addition to KRAS, the measurement device 100 can also determine as to the presence or absence of a mutation in BRAF, PIK3CA, NRAS, EGFR, ALK Fusions, ALK Mut. or the like depending on the type of a reagent to be accommodated in the second container 210 in advance. The determination about the presence or absence of a mutation in KRAS, BRAF, PIK3CA or NRAS is useful for the diagnosis of, for example, colorectal cancer. The determination about the presence or absence of a mutation in KRAS, BRAF, PIK3CA, NRAS, EGFR, ALK Fusions or ALK Mut. is useful for the diagnosis of, for example, non-small cell lung cancer.

### (Modified example)

The embodiments disclosed herein are for illustrative purposes only in any way, and it should not be regarded as limiting the scope of the present invention. The scope of the present invention is defined by the appended claims rather than by the above-stated description of the embodiments, and all changes that fall within meets and bounds of the claims or equivalence of such meets and bounds are therefore intended to be embraced by the claims.

In the above-mentioned embodiment, an example is described, in which the opening/closing member 40 is configured slidably along the upper surface 20a of the temperature adjusting unit 20. However, the opening/closing member 40 may be, for example, an opening/closing member movable in the vertical direction relative to the temperature adjusting unit 20. In this case, the opening/closing member is configured in such that: the opening/closing member closes the upper surface 20a of the temperature adjusting unit 20 before a user installs the reaction container 50 in the temperature adjusting unit 20; and the opening/closing member moves in the upper direction in such a manner that the opening/closing member moves away from the temperature adjusting unit 20 upon the installation of the reaction container 50 in the temperature adjusting unit 20 by a user.

In the above-mentioned embodiment, an example is described, in which the installation unit 10 prevents the misalignment of the reaction container 50 in the horizontal direction by means of the inside surface of the depressed portion 11. However, the misalignment and detachment of the reaction container 50 may be prevented by providing an engaging structure capable of engaging with the reaction container 50 in the installation unit 10.

In the above-mentioned embodiment, an example is described, in which the temperature adjusting unit 20 has an upper surface 20a that is away from the specimen accommodation section 51 in the reaction container 50 installed in the installation unit 10 in the proximity to the specimen accommodation section 51. However, the temperature adjusting unit 20 may have a structure having an upper surface 20a that contacts with the specimen accommodation section 51 in the reaction container 50. In the above-mentioned embodiment, an example is described, in which the temperature adjusting unit 20 has a function to warm the reaction container 50. However, the temperature adjusting unit 20 may further have a function to cool the reaction container 50.

In the above-mentioned embodiment, an example is described, in which the biological specimen is a portion of a tissue collected from a subject or a cell collected from a subject. However, the biological specimen may be a liquid such as blood (whole blood, serum or plasma), urine or other body fluid collected from a subject, or may be a liquid obtained by subjecting the collected liquid to a specific pretreatment. The specimen is derived primarily from a human body, but may be derived from another non-human animal. In the above-mentioned embodiment, an example is described, in which an analyte bound to a labeling substance is detected by detecting the labeling substance in a pretreated sample. However, the analyte may contain a specific chemical substance, cell or formed element. The analyte may be a specific cell, intercellular substance, antigen or antibody, protein, peptide or the like. The measurement device 100 may be a nucleic acid analysis device, a blood cell counting device, a cell image analysis device, a blood coagulation measurement device, an immunoassay device, or a urine formed element measurement device, or may be a measurement device other than these devices.

In the above-mentioned embodiment, an example is described, in which the opening/closing member 40 is moved mechanically by applying an external force by a user without the need to use an actuator. However, the opening/closing member 40 may be moved between the first position P1 and the second position P2 by means of an actuator such as a motor, a solenoid and a pneumatic cylinder.

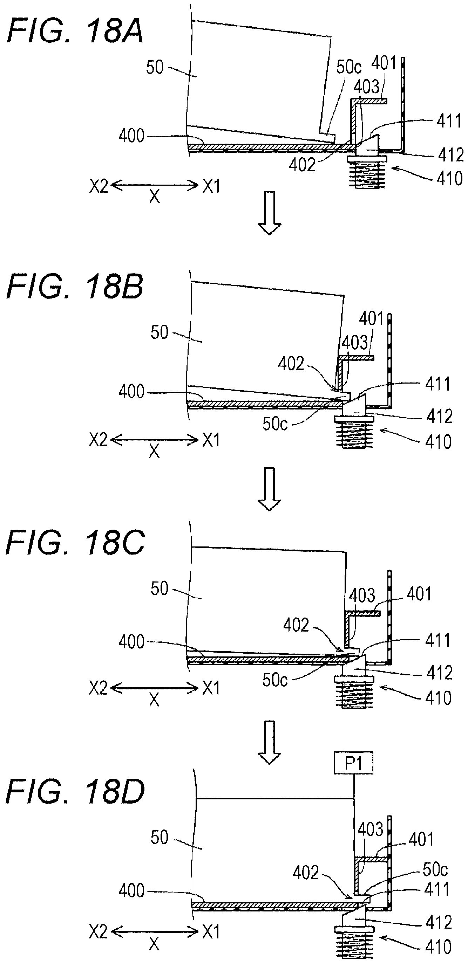

In the above-mentioned embodiment, an example is described, in which the state of the locking mechanism 180 is switched to an unlocked state by the contact of the side surface plates 58c and 58d in the reaction container 50 with the second pressed part 183 in the locking mechanism 180. However, in the modified example shown in Figs. 18A to 18C, the first end part 50c in the reaction container 50 contacts with the first pressed part 401 in the opening/closing member 400 and the second pressed part 411 in the locking mechanism 410. The first pressed part 401 has a through-hole 402 formed therein. The locking mechanism 410 is a plunger-type mechanism having the second pressed part 411 that is composed of an inclined surface contacting with the first end part 50c and a locking part 412 for locking an abutting surface 403 of the opening/closing member 400, wherein the second pressed part 411 and the locking part 412 are integrated with each other. The second pressed part 411 (see Fig. 18B) contacts with the first end part 50c that has passed through the through-hole 402 in the first pressed part 43 to push the plunger downward to a level corresponding to the pushing depth of the first end part 50c. As a result, the locking part 412 that is a side surface of the plunger moves to a position at which the locking part 412 cannot contact with the abutting surface 403 (see Fig. 18C). When the reaction container 50 is pushed in the X1 direction, the opening/closing member 400 runs on the plunger and then moves to the first position P1 (see Fig. 18D) while pressing down the plunger.

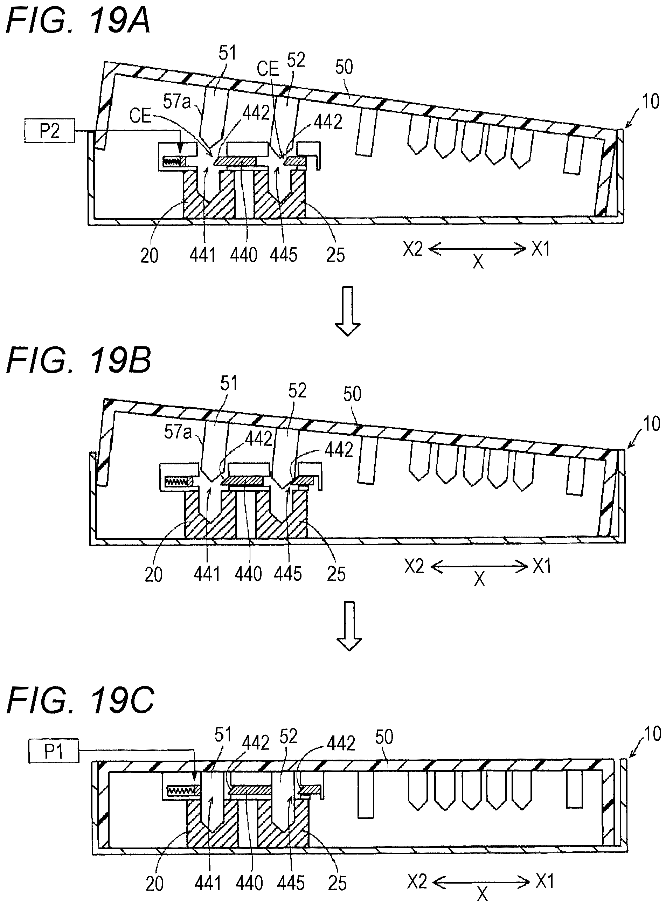

As in the case of the modified example shown in Figs. 19A to 19C, the opening/closing member 440 may contact with the reaction container 50 at a position other than the first end part 50c of the reaction container 50 and, as a result, be moved. In the example shown in Fig. 19, each of the specimen accommodation section 51 and the reagent accommodation section 52 in the reaction container 50 has a tapered shape and has an inclined surface as the lower surface thereof. At each of the peripheral part CE of the through-hole 441 and the peripheral part CE of the through-hole 445 in the opening/closing member 440, the first pressed part 442 composed of an inclined surface that is a descending slope toward the center of the hole is provided. Therefore, when the reaction container 50 is to be installed, the lower surface of the specimen accommodation section 51 contacts with the first pressed part 442 (see Fig. 19B) to push the reaction container 50 upward. As a result, the opening/closing member 440 is moved to the first position P1 (see Fig. 19C) while pushing away the opening/closing member 440 along the inclined surface. In this modified example, because the first pressed part 442 can be provided at the through-hole 441, the opening/closing member 440 can be formed in a smaller size.

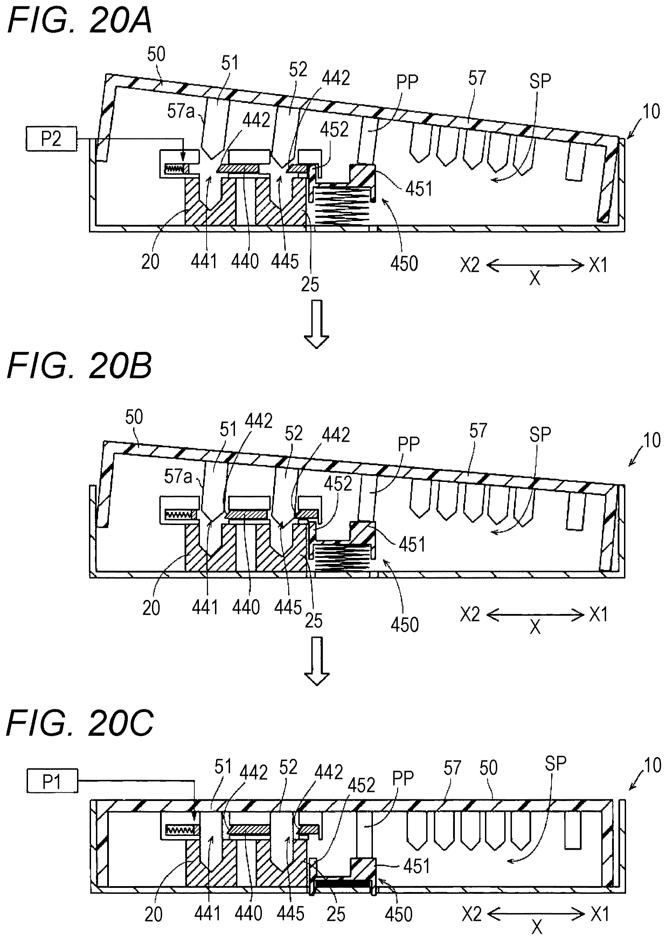

Figs. 20A to 20C show an example in which a locking mechanism 450 is additionally provided in the modified example shown in Figs. 19A to 19C. In the reaction container 50, a pressing piece PP which projects downward from the upper surface plate 57 is provided in the space SP surrounded by the side surface plates 58a to 58d. As shown in Figs. 20A to 20C, when the reaction container 50 is to be installed, the pressing piece PP abuts on the second pressed part 451 in the locking mechanism 450 to push the second pressed part 451 downward and, as a result, the locking part 452 for locking the opening/closing member 440 is moved. In this manner, the locking mechanism becomes in an unlocked state.

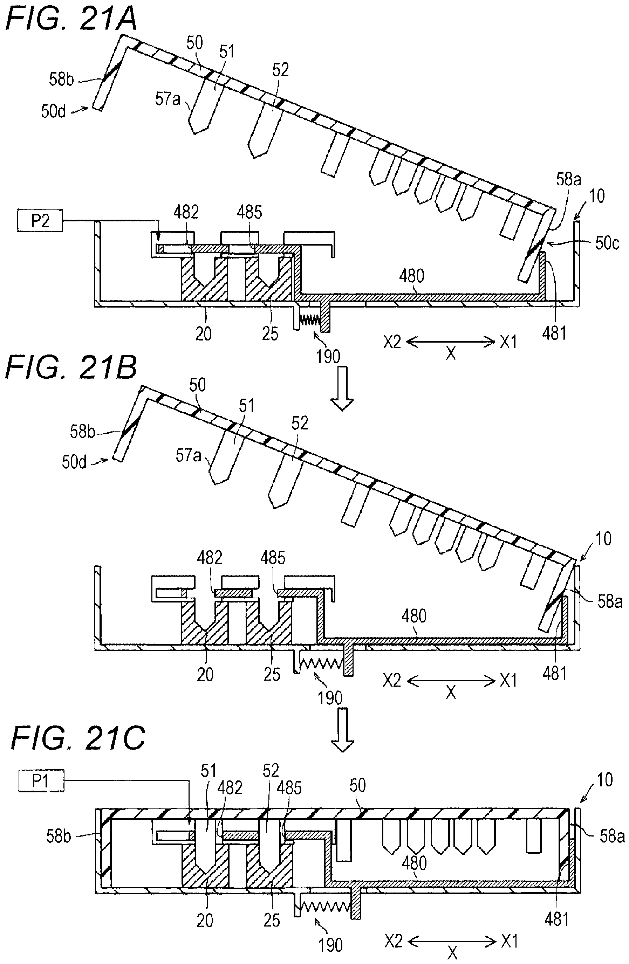

In the modified example shown in Figs. 21A to 21C, the first pressed part 481 in the opening/closing member 480 has a flat-plate-like shape which projects upward in the inside of the depressed portion 11. As shown in Figs. 21A to 21C, a user makes the side surface plate 58a which is the first end part 50c of the reaction container 50 to contact with the first pressed part 481 to push the side surface plate 58a in the X1 direction, whereby the opening/closing member 480 is moved to the first position P1. Subsequently, the user makes the second end part 50d side to move in a downward direction to accommodate the reaction container 50 in the depressed portion 11. At this time, the specimen accommodation section 51 is installed on the temperature adjusting unit 20 through the through-hole 482. The reagent accommodation section 52 is also installed on the temperature adjusting unit 25 through the through-hole 485. In this modified example, each of the lower surface of the specimen accommodation section 51 and the peripheral part of the through-hole 482 may not have an inclined surface.

## Claims

1. A specimen treatment device for treating a specimen accommodated in a reaction container, the specimen treatment device comprising:
an installation unit in which the reaction container is installed;
a temperature adjusting unit for warming the reaction container installed in the installation unit; and
an opening/closing member which is movable between a first position at which the temperature adjusting unit is uncovered and a second position at which the temperature adjusting unit is covered.

2. The specimen treatment device according to claim 1, wherein
the first position is a position at which access of the reaction container to the temperature adjusting unit through the installation unit is permitted, and
the second position is a position at which the temperature adjusting unit is covered and the access of the reaction container to the temperature adjusting unit is blocked.

3. The specimen treatment device according to claim 1 or 2, wherein the opening/closing member is configured to move from the second position to the first position in conjunction with operation to install the reaction container in the installation unit.

4. The specimen treatment device according to claim 3, wherein the opening/closing member includes a first pressed part which is pressed against the reaction container, and is configured to move toward the first position by pressing the first pressed part by the reaction container that is moved toward the installation unit.

5. The specimen treatment device according to claim 4, wherein
the installation unit has a depressed portion which has the temperature adjusting unit and the opening/closing member arranged therein and which receives the reaction container, and
the opening/closing member is configured to move to the first position in conjunction with operation to move a second end part of the reaction container into the depressed portion while pressing a first end part of the reaction container against the first pressed part in the depressed portion.

6. The specimen treatment device according to any one of claims 1 to 5, wherein the opening/closing member is configured to move from the first position to the second position in conjunction with operation to remove the reaction container from the installation unit.

7. The specimen treatment device according to claim 6, further comprising
a first biasing member for biasing the opening/closing member to the second position, wherein
the opening/closing member is configured to be held at the first position against a biasing force of the first biasing member upon the pressing of the reaction container, and to move to the second position by the biasing force of the first biasing member upon the removal of the reaction container.

8. The specimen treatment device according to any one of claims 1 to 7, further comprising
a locking mechanism for releasably regulating the movement of the opening/closing member from the second position to the first position, wherein
the locking mechanism is configured that the regulation of the movement of the opening/closing member is released in conjunction with operation to install the reaction container in the installation unit.

9. The specimen treatment device according to claim 8, wherein the locking mechanism is configured to switch a state where the regulation of the movement of the opening/closing member is released to a state where the movement of the opening/closing member is regulated, in conjunction with operation to remove the reaction container from the installation unit.

10. The specimen treatment device according to claim 8 or 9, wherein the locking mechanism includes a second pressed part which releases the regulation of the movement upon the pressing of the second pressed part against the reaction container in conjunction with operation to install in the installation unit.

11. The specimen treatment device according to claim 10, wherein
the locking mechanism further includes a locking part configured to lock the opening/closing member at the second position and to move integrally with the second pressed part, and
the locking part is configured to move to a position at which the locking of the opening/closing member is released in conjunction with movement of the second pressed part which is pressed against the reaction container.

12. The specimen treatment device according to claim 11, wherein
the locking mechanism further includes a second biasing member for biasing the locking part to a position at which the opening/closing member is locked, and
the locking part is configured to be held at a position at which the locking of the opening/closing member is released against a biasing force of the second biasing member upon the pressing of the reaction container against the second pressed part and to move to a position at which the opening/closing member is locked by the biasing force of the second biasing member upon the removal of the reaction container.

13. The specimen treatment device according to any one of claims 10 to 12, wherein
the installation unit includes a passage part through which the reaction container passes upon the pressing of the second pressed part, and
the passage part is formed in such a shape that a part of the reaction container is passable therethrough and a passage of a finger of an operator is prevented.

14. The specimen treatment device according to any one of claims 8 to 13, wherein
the installation unit has a depressed portion which has the temperature adjusting unit, the opening/closing member and the locking mechanism arranged therein and which receives the reaction container,
the locking mechanism release the regulation of the movement of the opening/closing member when the reaction container reaches a first height position upon the installation of the reaction container in the depressed portion,
the opening/closing member moves to the first height position when the reaction container reaches a second height position which is located below the first height position, and
a specimen accommodation section in the reaction container is arranged on the temperature adjusting unit when the reaction container reaches a third height position which is located at a same level as the second height position or below the second height position.

15. A measurement method using a measurement device for measuring a sample, the method comprising:
warming a reaction container installed in the measurement device by a temperature adjusting unit;
collecting a sample in the reaction container which has been warmed by the temperature adjusting unit, and then measuring the collected sample; and
covering the upper surface of the temperature adjusting unit, from which the reaction container has been removed by a user, with an opening/closing member which is arranged movably.
